# EUROPEAN PATENT APPLICATION

(11) **EP 3 663 353 A1**
(43) Date of publication of application: **10.06.2020**
(21) Application number: 18842315.6
(22) Date of filing: 27.07.2018
(51) Int. Cl.: C08L 33/02, B41J 2/01, B41M 5/00, C08K 5/3445, C08K 5/3492, C08L 53/00, C08L 55/00, C09D 11/326, C09D 11/38

(54) **POLYMER EMULSION**

(30) Priority: 02.08.2017 JP 2017150146
(71) Applicant: Kao Corporation, Chuo-Ku Tokyo 103-8210 (JP)
(72) Inventor: SUZUKI, Takayuki, Wakayama-shi Wakayama 640-8580 (JP); YAMAMOTO, Takako, Haga-gun Tochigi 3213497 (JP); MAEKAWA, Erika, Wakayama-shi Wakayama 640-8580 (JP); UEDA, Yasufumi, Wakayama-shi Wakayama 640-8580 (JP)
(74) Representative: Hoffmann Eitle
(86) International application number: PCT/JP2018/028310
(87) International publication number: WO 2019/026805

(57) **Abstract**

The present invention relates to a polymer emulsion that is capable of exhibiting excellent rub fastness even when formed into a coating film or even when printed on a low-liquid absorbing printing medium, and a water-based ink for ink-jet printing which is excellent in ejection stability and antibleeding properties upon the ink-jet printing. The present invention provides [1] a polymer emulsion containing a polymer and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of 150 to 300 mgKOH/g; and the polymer emulsion further contains a formaldehyde-releasing compound; and [2] a water-based ink for ink-jet printing containing a pigment, the aforementioned polymer, a water-soluble organic solvent and water, in which the water-soluble organic solvent contains at least one compound selected from the group consisting of a polyhydric alcohol and a polyhydric alcohol alkyl ether, and a total content of the polyhydric alcohol and the polyhydric alcohol alkyl ether in the ink is not less than 18% by mass; and the water-based ink further contains a formaldehyde-releasing compound.

## Description

### FIELD OF THE INVENTION

The present invention relates to a polymer emulsion and a water-based ink for ink-jet printing.

### BACKGROUND OF THE INVENTION

In ink-jet printing methods, droplets of ink are directly ejected onto a printing medium from very fine nozzles and allowed to adhere to the printing medium to form characters or images thereon. The ink-jet printing methods have become rapidly spread because of various advantages such as easiness of full coloration, low cost, capability of using a plain paper as the printing medium, non-contact with the printed characters or images, etc.

In recent years, in order to impart good weathering resistance and good water resistance to printed materials, water-based inks containing a pigment as a colorant and using a polymer as a binder or a dispersant for the pigment have been extensively used.

For example, JP 2006-524269A (Patent Literature 1) discloses latex particulates used in an ink-jet ink which are excellent in dispersion stability in the ink and have a specific bulk density and a specific surface dielectric constant.

In addition, it has been required to print characters or images not only on a conventional high-absorptive printing medium such as those called a plain paper and a copying paper, etc., but also on a printing medium for commercial printing purposes such as a low-liquid absorbing coated paper such as an offset coated paper or a non-liquid absorbing resin film.

In the case where characters or images are printed on such a low-absorbing or non-absorbing printing medium by an ink-jet printing method, there tends to occur such a problem that the pigment remains adhered onto a surface of the printing medium without penetrating into the printing medium, and is therefore likely to peel off from the printing medium. For this reason, it has been required that the inks used for ink-jet printing are improved in rub fastness.

On the other hand, when recording (printing) characters or images by an ink-jet printing method, there tends to occur such a problem that bleeding of the inks is caused (at a boundary) between ink dots having different colors which are ejected with a time lag, and therefore the inks have been required to have high-level printing performance.

For example, JP 2006-176624A (Patent Literature 2) discloses a water-based ink for ink-jet printing which is excellent in dispersion stability and ejection properties and exhibits high optical density and high antibleeding properties, and further which contains a water-insoluble polymer having a weight-average molecular weight of 1000 to 15000 and containing not less than 90% by weight of a constitutional unit derived from a hydrophobic monomer and ionic groups at both terminal ends of the polymer, and a colorant. In Examples of the Patent Literature 2, there is described the water-based ink that contains glycerin, diethylene glycol and 2-{2-(2-butoxyethoxy)ethoxy}ethanol in a total amount of 40 parts by weight on the basis of 100 parts by weight of the water-based ink.

Moreover, in general, pigment water dispersions such as water-based inks tend to have defects such as mold growth over time and propagation of putrefying bacteria, and therefore a mildew-proof agent or an antiseptic agent has been used in the pigment water dispersions.

JP 2009-535486A (Patent Literature 3) discloses an inkjet ink that can be used to produce printed products having higher durability. In Examples of the Patent Literature 3, there is described the ink containing a dispersion prepared by dispersing a black pigment with an anionic polymer dispersant in the form of a graft copolymer, 1,3-dihydrosylmethyl-5,5-dimethyl hydantoin (corresponding to an antiseptic agent; its content in the ink: 97 ppm), and glycerin and ethylene glycol as an organic solvent (total content of glycerin and ethylene glycol in the ink: 26% by weight). In the paragraph [0140] of the Patent Literature 3, it is described that the graft copolymer is such a graft copolymer as prepared by the method described in Examples in the specification of U.S. Patent Publication 2003/128246A, i.e., phenoxyethyl acrylate-g-ethoxy-triethylene glycol methacrylate-co-methacrylic acid which is produced by grafting a macromonomer obtained by reacting ethoxy-triethylene glycol methacrylate and methacrylic acid to a main chain constituted of phenoxyethyl acrylate (in which a mass ratio of phenoxyethyl acrylate/ethoxy-triethylene glycol methacrylate/methacrylic acid is 66.3/4.2/29.5).

### SUMMARY OF THE INVENTION

The present invention relates to the following aspects [1] and [2].
[1] A polymer emulsion containing a polymer and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; and the polymer emulsion further contains a formaldehyde-releasing compound.
[2] A water-based ink for ink-jet printing containing a pigment, a polymer, a water-soluble organic solvent and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; the water-soluble organic solvent contains at least one compound selected from the group consisting of a polyhydric alcohol and a polyhydric alcohol alkyl ether, and a total content of the polyhydric alcohol and the polyhydric alcohol alkyl ether in the water-based ink is not less than 18% by mass; and the water-based ink further contains a formaldehyde-releasing compound.

### DETAILED DESCRIPTION OF THE INVENTION

The Patent Literature 2 describes the technology that is capable of improving ejection stability and antibleeding properties of the ink, in which the kinds of polymerization initiators, chain transfer agents or the like used, for example, upon production of the polymer, are however restricted in order to obtain a water-insoluble polymer containing ionic groups at both terminal ends thereof. It is considered that the effect given by the water-insoluble polymer containing ionic groups at both terminal ends thereof is due to electrostatic repulsion between the polymer particles. However, even though an ionicity of the polymer as a whole is increased, i.e., even though the acid value of the polymer is increased, it is not necessarily possible to improve ejection stability and antibleeding properties of the resulting ink.

In addition, in the inkjet ink described in the Patent Literature 3, there tends to occur such a problem that the ink is insufficient in antibleeding properties when printed on a low-liquid absorbing substrate.

Under these circumstances, the present invention relates to a polymer emulsion that is capable of exhibiting excellent rub fastness even when formed into a coating film or even when printed on a low-liquid absorbing printing medium, and a water-based ink for ink-jet printing which is excellent in ejection stability and antibleeding properties upon the ink-jet printing.

That is, the present invention relates to the following aspects [1] and [2].
[1] A polymer emulsion containing a polymer and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; and the polymer emulsion further contains a formaldehyde-releasing compound.
[2] A water-based ink for ink-jet printing containing a pigment, a polymer, a water-soluble organic solvent and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; the water-soluble organic solvent contains at least one compound selected from the group consisting of a polyhydric alcohol and a polyhydric alcohol alkyl ether, and a total content of the polyhydric alcohol and the polyhydric alcohol alkyl ether in the water-based ink is not less than 18% by mass; and the water-based ink further contains a formaldehyde-releasing compound.

Meanwhile, the below-mentioned terms as used in the present specification have the following meanings.

The term "water-based" as used herein means that water has a largest content among components of a medium for dispersing a pigment in an ink.

The term "printing" as used herein means a concept that includes printing or typing for printing characters or images, and the term "printed material" as used herein means a concept that includes printed matters or typed materials on which the characters or images are printed.

The term "low-liquid absorbing" as used herein means a concept that includes both of low-liquid absorbing properties and non-liquid absorbing properties of a printing medium in which the liquid means water and/or an ink, and the low-liquid absorbing properties may be evaluated by water absorption of the printing medium as measured using pure water. More specifically, the low-liquid absorbing properties mean that the printing medium has a water absorption of not less than 0 g/m² and not more than 10 g/m² as measured under the condition that a contact time between the printing medium and pure water is 100 milliseconds.

In accordance with the present invention, it is possible to provide a polymer emulsion that is capable of exhibiting excellent rub fastness even when formed into a coating film or even when printed on a low-liquid absorbing printing medium, and a water-based ink for ink-jet printing which is excellent in ejection stability and antibleeding properties upon the ink-jet printing.

### [Polymer Emulsion]

The polymer emulsion of the present invention is characterized by containing a polymer and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; and the polymer emulsion further contains a formaldehyde-releasing compound.

The polymer emulsion of the present invention may be compounded in a polymer coating solution or a water-based ink, etc., for example, for the purpose of forming a coating film thereof.

The polymer emulsion of the present invention is capable of exhibiting excellent rub fastness even when formed into a coating film or even when printed on a low-liquid absorbing printing medium. The reason why the aforementioned advantageous effect can be attained by the present invention is considered as follows though it is not clearly determined yet.

That is, the polymer emulsion of the present invention contains the polymer that is a random copolymer or a block copolymer which contains a constitutional unit derived from (a) at least one monomer selected from the group consisting of acrylic acid and methacrylic acid and a constitutional unit derived from (b) a hydrophobic vinyl monomer, and has an acid value of not less than 150 mgKOH/g and not more than 300 mgKOH/g. The aforementioned random copolymer or block copolymer may contain a grafted chain, but contains, on a main chain thereof, the constitutional unit derived from the at least one monomer (a) selected from the group consisting of acrylic acid and methacrylic acid and the constitutional unit derived from the hydrophobic vinyl monomer (b). It is considered that since the constitutional unit derived from the hydrophobic vinyl monomer (b) is present in the main chain of the polymer, adsorption of the polymer onto a surface of the printing medium is promoted, so that the resulting ink is improved in rub fastness. In this case, it is considered that if the polymer emulsion further contains a formaldehyde-releasing compound, the formaldehyde released from the compound accelerates plasticization of the polymer, so that the polymer tends to be readily adsorbed onto the surface of the printing medium, etc. In addition, it is considered that even when the polymer exhibits large charge repulsion owing to its acid value as high as not less than 150 mgKOH/g, restriction on the disposition of acid groups in the polymer is relaxed, and therefore unification or aggregation between the polymer particles and formation of a coating film thereof on the printing medium upon drying the ink are facilitated, so that the resulting ink can be further improved in rub fastness.

### [Water-Based Ink for Ink-Jet Printing]

The water-based ink for ink-jet printing according to the present invention (hereinafter also referred to merely as a "water-based ink" or an "ink") is characterized by containing a pigment, a polymer, a water-soluble organic solvent and water, in which the polymer is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; the water-soluble organic solvent contains at least one compound selected from the group consisting of a polyhydric alcohol and a polyhydric alcohol alkyl ether, and a total content of the polyhydric alcohol and the polyhydric alcohol alkyl ether in the water-based ink is not less than 18% by mass; and the water-based ink further contains a formaldehyde-releasing compound.

The water-based ink of the present invention is excellent in ejection stability and antibleeding properties upon ink-jet printing. The reason why the aforementioned advantageous effect can be attained by the present invention is considered as follows, though it is not necessarily clearly determined yet.

That is, the water-based ink of the present invention contains, as a dispersant for the pigment, the polymer that is a random copolymer or a block copolymer which contains a constitutional unit derived from (a) at least one monomer selected from the group consisting of acrylic acid and methacrylic acid and a constitutional unit derived from (b) a hydrophobic vinyl monomer, and has an acid value of not less than 150 mgKOH/g and not more than 300 mgKOH/g. The aforementioned random copolymer or block copolymer may contain a grafted chain, but contains, on a main chain thereof, the constitutional unit derived from the at least one monomer (a) selected from the group consisting of acrylic acid and methacrylic acid and the constitutional unit derived from the hydrophobic vinyl monomer (b). Since the constitutional unit derived from the hydrophobic vinyl monomer (b) is present in the main chain of the polymer, adsorption of the polymer onto a surface of the pigment is promoted. In addition, since the carboxy groups of acrylic acid and/or methacrylic acid which are present in the main chain of the polymer are neutralized, the polymer can exhibit affinity to water and charge repulsion owing to its acid value of not less than 150 mgKOH/g, so that the resulting water-based ink can be improved in dispersibility of the pigment therein.

Furthermore, the formaldehyde released from the formaldehyde-releasing compound accelerates plasticization of the polymer in cooperation with the polyhydric alcohol and the polyhydric alcohol alkyl ether acting as a solvent for the ink. It is estimated that, in particular, a peripheral portion of the respective ink droplets impacted on the printing medium is influenced by the plasticization of the polymer, so that the ink droplets can be prevented from being mixed with each other before being dried owing to uniform charge repulsion therebetween. As a result, it is considered that the resulting ink is inhibited from suffering from bleeding, and since the formaldehyde accelerates plasticization of the polymer, the dispersing groups (carboxy groups) of the polymer which contribute to good dispersion stability of the ink tend to be exposed onto the surface of the polymer, so that the resulting ink can be improved in ejection stability upon ink-jet printing.

In the following, the respective components used in the polymer emulsion and the water-based ink for ink-jet printing according to the present invention are explained.

### <Polymer>

The polymer used in the polymer emulsion of the present invention is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g. The aforementioned polymer used in the polymer emulsion may be any suitable polymer as long as it contains the constitutional units derived from the aforementioned monomers (a) and (b) in the main chain thereof, and the acid value thereof lies within the aforementioned range. The polymer used in the polymer emulsion of the present invention is preferably in the form of a water-insoluble polymer from the viewpoint of dispersing the polymer in water.

The polymer used in the water-based ink of the present invention is a random copolymer or a block copolymer which contains a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g. The aforementioned polymer used in the water-based ink of the present invention may be any suitable polymer as long as it contains the constitutional units derived from the aforementioned monomers (a) and (b) in the main chain thereof, and the acid value thereof lies within the aforementioned range. The polymer may be in the form of either a water-insoluble polymer or a water-soluble polymer, and is preferably in the form of a water-insoluble polymer from the viewpoint of improving ejection stability of the resulting ink.

The carboxy group-containing polymer may be subjected to crosslinking treatment, if required. When subjecting a part of the carboxy groups of the carboxy group-containing polymer to crosslinking treatment, the carboxy group-containing polymer can be transformed into a water-insoluble polymer by the crosslinking treatment even though the carboxy group-containing polymer is in the form of a water-soluble polymer.

In addition, when compounding the polymer emulsion of the present invention with the pigment and the water-soluble organic solvent, it is possible to produce the water-based ink of the present invention.

### (Carboxy Group-Containing Polymer)

The polymer used in the present invention has a function as a dispersant capable of exhibiting the effect of dispersing the pigment, etc.. Namely, the polymer used in the present invention can be used as a polymer dispersant.

In the case where the polymer is a water-insoluble polymer, the polymer is kept water-insoluble not only surely in a non-neutralized state, but also even after neutralizing a part of the carboxy groups thereof. The term "water-insoluble polymer" as used herein means that when dispersing the polymer in water, the resulting water dispersion of the polymer does not become transparent. On the other hand, even if the water dispersion of the polymer looks to be transparent when visually observed, in the case where Tyndall phenomenon is recognized in the water dispersion when observed under irradiation with laser light or ordinary light, the polymer is regarded as being water-insoluble. More specifically, when the polymer is dried to a constant weight at 105°C for 2 hours and then dissolved in 100 g of ion-exchanged water at 25°C until reaching a saturation concentration thereof, if the solubility in water of the polymer is less than 10 g, the polymer is regarded as being water-insoluble. In the case where the polymer is an anionic polymer, the aforementioned solubility of the polymer means a solubility in water of the polymer whose anionic groups are neutralized completely (i.e., 100%) with sodium hydroxide.

The acid value of the carboxy group-containing polymer is attributed to the carboxy groups present therein. The acid value of the carboxy group-containing polymer is preferably not less than 200 mgKOH/g and more preferably not less than 220 mgKOH/g, and is also preferably not more than 280 mgKOH/g, more preferably not more than 270 mgKOH/g and even more preferably not more than 260 mgKOH/g. When the acid value of the carboxy group-containing polymer lies within the aforementioned range, the amount of the carboxy groups and the neutralized carboxy groups in the carboxy group-containing polymer is sufficient, and it is therefore possible to ensure good dispersion stability of the pigment, etc. In addition, the acid value of the carboxy group-containing polymer which lies within the aforementioned range is also preferred from the viewpoint of attaining good balance between affinity of the polymer to an aqueous medium and interaction of the polymer with the pigment or a substrate such as a printing medium, etc.

The acid value of the carboxy group-containing polymer may be calculated from a mass ratio between the respective monomers constituting the carboxy group-containing polymer. In addition, the acid value of the carboxy group-containing polymer may also be determined by the method in which the polymer is dissolved in or swelled with an adequate organic solvent and then the resulting solution or swelled product is subjected to titration, such as the method as described in Examples below, etc.

The glass transition temperature (Tg) of the carboxy group-containing polymer is preferably not lower than 50°C, more preferably not lower than 60°C, even more preferably not lower than 70°C and further even more preferably not lower than 80°C, and is also preferably not higher than 120°C and more preferably not higher than 110°C, from the viewpoint of improving rub fastness of the resulting polymer emulsion when formed into a coating film as well as rub fastness of printed materials when printed on a low-liquid absorbing printing medium (hereinafter comprehensively referred to merely as "rub fastness"). In addition, from the viewpoint of facilitating formation of a coating film of the polymer emulsion, the glass transition temperature (Tg) of the carboxy group-containing polymer is even more preferably not higher than 100°C. The glass transition temperature of the carboxy group-containing polymer may be adjusted to a desired value by controlling the kinds or compositional ratios of the respective monomers constituting the polymer.

Meanwhile, the glass transition temperature (Tg) of the carboxy group-containing polymer may be measured by the method described in Examples below.

The carboxy group-containing polymer used in the present invention is a random copolymer or a block copolymer which contains the constitutional unit derived from the at least one monomer (a) selected from the group consisting of acrylic acid and methacrylic acid and the constitutional unit derived from the hydrophobic vinyl monomer (b).

The carboxy group-containing polymer is a vinyl-based polymer that is produced by subjecting a vinyl monomer mixture containing the at least one monomer (a) selected from the group consisting of acrylic acid and methacrylic acid (hereinafter also referred to merely as a "component (a)") and the hydrophobic vinyl monomer (b) (hereinafter also referred to merely as a "component (b)") (such a mixture is hereinafter also referred to merely as a "monomer mixture") to random copolymerization or block copolymerization. The vinyl-based polymer may further contain a constitutional unit derived from (c) a macromonomer (hereinafter also referred to merely as a "component (c)") or a constitutional unit derived from (d) a nonionic monomer (hereinafter also referred to merely as a "component (d)") on the main chain thereof.

### [At Least One Monomer (a) Selected From Group Consisting of Acrylic Acid and Methacrylic Acid]

The at least one monomer (a) selected from the group consisting of acrylic acid and methacrylic acid is used as a monomer component of the polymer from the viewpoint of improving rub fastness of the polymer emulsion as well as from the viewpoint of improving dispersibility of the pigment in the water-based ink with the polymer, preferably improving dispersion stability of the polymer particles containing the pigment (hereinafter also referred to merely as "pigment-containing polymer particles"). The carboxy groups of acrylic acid and/or methacrylic acid serve as the carboxy groups of the polymer.

### [(b) Hydrophobic Vinyl Monomer]

The hydrophobic vinyl monomer (b) is used as a monomer component of the polymer from the viewpoint of improving rub fastness of the polymer emulsion as well as from the viewpoint of improving dispersibility of the pigment in the water-based ink with the polymer, preferably improving dispersion stability of the pigment-containing polymer particles. As the hydrophobic vinyl monomer, there may be mentioned alkyl (meth)acrylates, aromatic group-containing monomers and the like, which contain an alkyl group having not less than 1 and not more than 22 carbon atoms or an aryl group having not less than 6 and not more than 22 carbon atoms. The molecular weight of the hydrophobic vinyl monomer (b) is preferably less than 500 and more preferably not more than 350.

The preferred alkyl (meth)acrylic acid esters are those alkyl (meth)acrylic acid esters containing an alkyl group having 1 to 22 carbon atoms and preferably 6 to 18 carbon atoms. Examples of the alkyl (meth)acrylic acid esters include methyl (meth)acrylate, ethyl (meth)acrylate, propyl (meth)acrylate, butyl (meth)acrylate, amyl (meth)acrylate, cyclohexyl (meth)acrylate, 2-ethylhexyl (meth)acrylate, octyl (meth)acrylate, decyl (meth)acrylate, dodecyl (meth)acrylate, stearyl (meth)acrylate, isopropyl (meth)acrylate, isobutyl (meth)acrylate, *tert*-butyl (meth)acrylate, isoamyl (meth)acrylate, isooctyl (meth)acrylate, isodecyl (meth)acrylate, isododecyl (meth)acrylate, isostearyl (meth)acrylate and the like.

Meanwhile, the term "(meth)acrylate" means at least one compound selected from the group consisting of an acrylate and a methacrylate, and the term "(meth)" is hereinafter also defined in the same way.

The aromatic group-containing monomer is preferably a vinyl monomer containing an aromatic group having 6 to 22 carbon atoms which may contain a substituent group containing a hetero atom, and more preferably a styrene-based monomer or an aromatic group-containing (meth)acrylate.

Specific examples of the preferred styrene-based monomer include styrene, *α*-methyl styrene, vinyl toluene and divinyl benzene. Among these styrene-based monomers, more preferred are styrene and *α*-methyl styrene.

Specific examples of the preferred aromatic group-containing (meth)acrylate include phenyl (meth)acrylate, benzyl (meth)acrylate, phenoxyethyl (meth)acrylate and the like. Among these aromatic group-containing (meth)acrylates, more preferred is benzyl (meth)acrylate.

As the hydrophobic vinyl monomer (b), there may be used any two or more of the aforementioned monomers, and the styrene-based monomer and the aromatic group-containing (meth)acrylate may also be used in combination with each other.

### [(c) Macromonomer]

The macromonomer (c) is in the form of a compound containing a polymerizable functional group at one terminal end thereof and having a number-average molecular weight of not less than 500 and not more than 100,000, and may be used as a monomer component of the polymer from the viewpoint of improving rub fastness of the polymer emulsion as well as from the viewpoint of improving dispersibility of the pigment in the water-based ink with the polymer, preferably improving dispersion stability of the pigment-containing polymer particles. The polymerizable functional group bonded to one terminal end of the macromonomer is preferably an acryloyloxy group or a methacryloyloxy group and more preferably a methacryloyloxy group.

The macromonomer (c) preferably has a number-average molecular weight of not less than 1,000 and not more than 10,000. Meanwhile, the number-average molecular weight of the macromonomer (c) may be measured by gel permeation chromatography using chloroform containing 1 mmol/L of dodecyl dimethylamine as a solvent and using polystyrenes as a reference standard substance.

As the macromonomer (c), from the same viewpoint as described above, there are preferably used an aromatic group-containing monomer-based macromonomer and a silicone-based macromonomer. Among these macromonomers, more preferred is the aromatic group-containing monomer-based macromonomer.

Examples of an aromatic group-containing monomer constituting the aromatic group-containing monomer-based macromonomer include those aromatic group-containing monomers as described previously with respect to the aforementioned hydrophobic vinyl monomer (b). Among these aromatic group-containing monomers, preferred are styrene and benzyl (meth)acrylate, and more preferred is styrene.

Specific examples of the styrene-based macromonomer include "AS-6(S)", "AN-6(S)" and "HS-6(S)" (tradenames) all available from Toagosei Co., Ltd., etc.

Specific examples of the silicone-based macromonomer include organopolysiloxanes containing a polymerizable functional group bonded to one terminal end thereof, etc.

### [(d) Nonionic Monomer]

From the viewpoint of improving rub fastness of the polymer emulsion as well as from the viewpoint of improving dispersibility of the pigment in the water-based ink with the polymer, preferably improving dispersion stability of the pigment-containing polymer particles, it is preferred that (d) a nonionic monomer is further used as a monomer component of the polymer.

Examples of the nonionic monomer (d) include 2-hydroxyethyl (meth)acrylate, 3-hydroxypropyl (meth)acrylate, a polyalkylene glycol (meth)acrylate such as polypropylene glycol (n = 2 to 30 wherein n represents an average molar number of addition of oxyalkylene groups: hereinafter defined in the same way) (meth)acrylate and polyethylene glycol (n = 2 to 30) (meth) acrylate, an alkoxy polyalkylene glycol (meth)acrylate such as methoxy polyethylene glycol (n = 1 to 30) (meth)acrylate, phenoxy (ethylene glycol/propylene glycol copolymer) (n = 1 to 30 in which n for ethylene glycol: n = 1 to 29) (meth)acrylate, and the like. Among these nonionic monomers, preferred are polypropylene glycol (n = 2 to 30) (meth)acrylate and phenoxy (ethylene glycol/propylene glycol copolymer) (meth)acrylate, and more preferred is polypropylene glycol (n = 2 to 30) (meth)acrylate.

Specific examples of commercially available products of the component (d) include "NK ESTER M-20G", "NK ESTER M-40G", "NK ESTER M-90G", "NK ESTER M-230G" and the like as products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as products available from NOF Corporation.

The aforementioned components (a) to (d) may be respectively used alone or in the form of a mixture of any two or more thereof.

As described above, the carboxy group-containing polymer used in the present invention is preferably an acrylic random copolymer or block copolymer which contains the constitutional unit derived from the at least one monomer (a) selected from the group consisting of acrylic acid and methacrylic acid and the constitutional unit derived from the at least one hydrophobic vinyl monomer (b) selected from the group consisting of an acrylate monomer, a methacrylate monomer and an aromatic group-containing monomer. In addition, the carboxy group-containing polymer may be a vinyl-based polymer that further contains, in addition to the aforementioned constituent units, the constitutional unit derived from the macromonomer (c) and/or the constitutional unit derived from the nonionic monomer (d) on the main chain thereof.

### (Contents of Respective Components in Monomer Mixture or Contents of Respective Constitutional Units in Polymer)

The contents of the aforementioned components (a) to (d) in the monomer mixture (contents of non-neutralized components; hereinafter defined in the same way) upon production of the carboxy group-containing polymer, i.e., the contents of the constitutional units derived from the respective components in the carboxy group-containing polymer are as follows, from the viewpoint of improving antibleeding properties of the resulting ink and ejection stability of the ink upon ink-jet printing.

The content of the component (a) is preferably not less than 8% by mass, more preferably not less than 10% by mass and even more preferably not less than 12% by mass, and is also preferably not more than 60% by mass, more preferably not more than 50% by mass and even more preferably not more than 45% by mass.

The content of the component (b) is preferably not less than 15% by mass, more preferably not less than 20% by mass and even more preferably not less than 25% by mass, and is also preferably not more than 80% by mass, more preferably not more than 70% by mass and even more preferably not more than 60% by mass.

In the case where the component (c) is included, the content of the component (c) is preferably not less than 5% by mass, more preferably not less than 8% by mass and even more preferably not less than 10% by mass, and is also preferably not more than 30% by mass, more preferably not more than 25% by mass and even more preferably not more than 20% by mass.

In the case where the component (d) is included, the content of the component (d) is preferably not less than 5% by mass, more preferably not less than 8% by mass and even more preferably not less than 10% by mass, and is also preferably not more than 35% by mass, more preferably not more than 30% by mass and even more preferably not more than 25% by mass.

The mass ratio of the constitutional unit derived from the component (a) to the constitutional unit derived from the component (b) [constitutional unit derived from component (a)/constitutional unit derived from component (b)] is preferably not less than 0.5, more preferably not less than 0.7 and even more preferably not less than 0.9, and is also preferably not more than 2.0, more preferably not more than 1.8 and even more preferably not more than 1.5, from the viewpoint of improving ejection stability of the resulting ink.

In addition, in the case where the component (c) is included, the mass ratio of the component (a) to a sum of the component (b) and the component (c) [component (a)/[component (b) + component (c)]] is preferably not less than 0.4, more preferably not less than 0.5 and even more preferably not less than 0.7, and is also preferably not more than 2.0, more preferably not more than 1.5 and even more preferably not more than 1.0, from the viewpoint of improving ejection stability of the resulting ink.

### (Production of Carboxy Group-Containing Polymer)

The carboxy group-containing polymer may be produced by random copolymerizing or block copolymerizing the aforementioned monomer mixture by known polymerization methods such as a bulk polymerization method, a solution polymerization method, a suspension polymerization method and an emulsion polymerization method, etc. Among these polymerization methods, preferred is the solution polymerization method.

The solvent used in the solution polymerization method is not particularly limited, and is preferably an organic polar solvent. If the organic polar solvent is miscible with water, the organic solvent may be used in the form of a mixture with water. Examples of the organic polar solvent include aliphatic alcohols having 1 to 3 carbon atoms; ketones having 3 to 5 carbon atoms; ethers; and esters such as ethyl acetate. Among these organic polar solvents, preferred is methanol, ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a chain transfer agent.

Examples of the polymerization initiator include conventionally known radical polymerization initiators, e.g., azo compounds such as 2,2'-azobisisobutyronitrile and 2,2'-azobis(2,4-dimethylvaleronitrile), and organic peroxides such as *t*-butyl peroxyoctoate and benzoyl peroxide. The amount of the radical polymerization initiator used in the polymerization reaction is preferably from 0.001 to 5 mol and more preferably from 0.01 to 2 mol per 1 mol of the monomer mixture.

Examples of the chain transfer agent include conventionally known chain transfer agents, e.g., mercaptans such as octyl mercaptan and 2-mercaptoethanol, and thiuram disulfides.

In addition, the type of a polymerization chain of the monomers to be polymerized is not particularly limited, and may be of any polymerization type such as a random type, a block type and a graft type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Furthermore, the polymerization is preferably conducted in a nitrogen gas atmosphere or in an atmosphere of an inert gas such as argon, etc.

After completion of the polymerization reaction, the polymer produced may be isolated from the obtained reaction solution by known methods such as reprecipitation and removal of the solvent by distillation. In addition, the resulting polymer may be purified by removing the unreacted monomers, etc., from the reaction solution by reprecipitation, membrane separation, chromatography, extraction, etc.

In the present invention, as the method of dispersing the pigment using the carboxy group-containing polymer, any optional conventionally known methods may be used. However, the method capable of obtaining the below-mentioned water dispersion of the pigment-containing polymer particles is preferably adopted. From the viewpoint of enhancing productivity of the water dispersion of the pigment-containing polymer particles, the obtained polymer is preferably used as such in the form of a polymer solution without removing the solvent used in the aforementioned polymerization reaction therefrom in order to use the organic solvent contained therein as an organic solvent used in the below-mentioned step 1.

The solid content of the carboxy group-containing polymer solution is preferably not less than 30% by mass and more preferably not less than 40% by mass, and is also preferably not more than 70% by mass and more preferably not more than 65% by mass, from the viewpoint of enhancing productivity of the water dispersion of the pigment-containing polymer particles.

The number-average molecular weight of the carboxy group-containing polymer used in the present invention is preferably not less than 2,000 and more preferably not less than 5,000, and is also preferably not more than 20,000 and more preferably not more than 18,000, from the viewpoint of exhibiting good adsorption of the polymer to the pigment and good dispersion stability of the resulting ink. The weight-average molecular weight of the carboxy group-containing polymer used in the present invention is preferably not less than 6,000 and more preferably not less than 8,000, and is also preferably not more than 80,000 and more preferably not more than 40,000.

Meanwhile, the number-average molecular weight of the polymer may be measured by the method described in Examples below.

### <Pigment>

The pigment used in the present invention is not particularly limited, and may be either an organic pigment or an inorganic pigment and may also be used in the form of a mixture of these pigments.

Examples of the organic pigment include at least one pigment selected from the group consisting of condensed polycyclic pigments such as anthraquinone-based pigments, quinacridone-based pigments, indigo-based pigments, dioxazine-based pigments, perylene-based pigments, perinone-based pigments, isoindolinone-based pigments, isoindoline-based pigments, phthalocyanine-based pigments, quinophthalone-based pigments and diketopyrrolopyrrole-based pigments, and azo-based pigments such as disazo-based pigments and condensed azo-based pigments. Of these organic pigments, from the viewpoint of improving color reproducibility of the printed characters or images, preferred is at least one pigment selected from the group consisting of quinacridone-based pigments, azo-based pigments and phthalocyanine-based pigments.

Specific examples of the quinacridone-based pigments include C.I. PR (Pigment Red) 122, PR 192, PR 202, PR 207 and PR 209; and C.I. PV (Pigment Violet) 19, etc. Of these quinacridone-based pigments, preferred is at least one pigment selected from the group consisting of C.I. PR 122 and C.I. PV 19. Specific examples of the azo-based pigments include C.I. PY (Pigment Yellow) 74, PY 151, PY 154, PY 155, PY 180 and PY 213. Of these azo-based pigments, preferred is at least one pigment selected from the group consisting of C.I. PY 74 and C.I. PY 154. Specific examples of the phthalocyanine-based pigments include C.I. PB (Pigment Blue) 15:1, PB 15:2, PB 15:3, PB 15:4, PB 15:5, PB 15:6 and PB 16; and C.I. PG (Pigment Green) 7 and PG 36. Of these phthalocyanine-based pigments, preferred is at least one pigment selected from the group consisting of C.I. PB 15:3 and C.I. PB 15:4.

The organic pigment also includes a derivative of the organic pigment as a raw material thereof. The organic pigment derivative may be produced by such a treatment in which a functional group such as a hydroxy group, a carboxy group, a carbamoyl group, a sulfo group, a sulfonamide group and a phthalimidomethyl group is bonded to the surface of the organic pigment.

Examples of the inorganic pigment include carbon blacks and metal oxides such as alumina and titanium dioxide. These inorganic pigments may be treated with a conventionally known hydrophobization agent such as a titanium coupling agent, a silane coupling agent and a higher fatty acid metal salt, etc.

The carbon blacks are preferably used for black inks. Examples of the carbon blacks include furnace blacks, thermal lamp blacks, acetylene blacks, channel blacks and the like, and the carbon blacks may also be surface-treated carbon blacks.

The aforementioned pigments may be used alone or in the form of a mixture of any two or more thereof.

In the present invention, the pigment and the polymer are preferably present in the water-based ink in the form of polymer particles containing the pigment (pigment-containing polymer particles). The "pigment-containing" as used herein means the configuration in which the pigment is enclosed or encapsulated in the respective polymer particles, the configuration in which the pigment is partially enclosed or encapsulated in the respective polymer particles and partially exposed from a surface of the respective polymer particles, or the configuration in which the polymer particles are adhered onto a surface of the pigment, as well as a mixture of these configurations. Among these configurations of the pigment and the polymer, preferred is the configuration in which the pigment is enclosed or encapsulated in the respective polymer particles.

### [Production of Pigment-Containing Polymer Particles]

The polymer particles containing the pigment (pigment-containing polymer particles) can be efficiently produced in the form of a water dispersion thereof by a process including the following steps 1 and 2.

Step 1: subjecting a mixture containing the carboxy group-containing polymer that is a random copolymer or a block copolymer which contains the constitutional unit derived from the at least one monomer (a) selected from the group consisting of acrylic acid and methacrylic acid and the constitutional unit derived from the hydrophobic vinyl monomer (b), and has an acid value of not less than 150 mgKOH/g and not more than 300 mgKOH/g, an organic solvent, the pigment and water, if required together with a neutralizing agent (hereinafter also referred to merely as a "pigment mixture") to dispersion treatment to obtain a dispersion of the pigment-containing polymer particles; and

Step 2: removing the organic solvent from the dispersion obtained in the step 1 to obtain a water dispersion of the pigment-containing polymer particles (hereinafter also referred to merely as a "pigment water dispersion").

Furthermore, if required, a crosslinking agent may be added to the pigment water dispersion obtained in the step 2 in order to subject the pigment-containing polymer particles to crosslinking treatment. By conducting the crosslinking treatment, even if the polymer constituting the pigment-containing polymer particles is in the form of a water-soluble polymer, the water-soluble polymer can be converted into a water-insoluble polymer after the crosslinking treatment.

### (Step 1)

The step 1 is the step of subjecting a mixture (pigment mixture) containing the carboxy group-containing polymer, an organic solvent, the pigment and water, if required together with a neutralizing agent to dispersion treatment to obtain a dispersion of the pigment-containing polymer particles.

The order of mixing of the respective components in the step 1 is not particularly limited, and there is preferably used such a method in which the carboxy group-containing polymer is first dissolved in the organic solvent, and then the neutralizing agent, water and the pigment, and if required, the neutralizing agent, etc., are successively added to the resulting organic solvent solution in this order, followed by mixing the obtained mixture, to thereby obtain a dispersion of an oil-in-water type.

The organic solvent used in the above step 1 is not particularly limited, and is preferably selected from aliphatic alcohols having 1 to 3 carbon atoms, ketones, ethers, esters and the like. Of these organic solvents, from the viewpoints of improving wettability to the pigment, solubility of the water-soluble polymer or the water-insoluble polymer therein and adsorption of the water-soluble polymer or the water-insoluble polymer onto the pigment, more preferred are ketones having not less than 4 and not more than 8 carbon atoms, even more preferred are acetone, methyl ethyl ketone and methyl isobutyl ketone, and further even more preferred is methyl ethyl ketone.

When the carboxy group-containing polymer is synthesized by a solution polymerization method, the solvent used in the solution polymerization method may be directly used as such in the step 1.

### (Neutralization)

The carboxyl groups contained in the carboxy group-containing polymer are preferably at least partially neutralized using the neutralizing agent, preferably an alkali metal compound. The pH value of the resulting dispersion is preferably not less than 5.5 and more preferably not less than 6 from the viewpoint of improving handling properties for suppression of skin irritation, etc., and is also preferably not more than 13, more preferably not more than 12 and even more preferably 11 from the viewpoint of suppressing corrosion of members.

The alkali metal compound as the neutralizing agent is a compound that is capable of forming an alkali metal ion in water or an aqueous medium such as that of the water-based ink. Examples of the alkali metal compound include alkali metal hydroxides such as lithium hydroxide, sodium hydroxide, potassium hydroxide and cesium hydroxide; alkali metal salts of silicic acid such as sodium orthosilicate, sodium metasilicate and sodium sesquisilicate; alkali metal salts of phosphoric acid such as trisodium phosphate; alkali metal salts of carbonic acid such as disodium carbonate, sodium hydrogencarbonate and dipotassium carbonate; alkali metal salts of boric acid such as sodium borate; and the like. These alkali metal compounds may be used in combination of any two or more thereof. Of these alkali metal compounds, preferred are alkali metal hydroxides, and more preferred are sodium hydroxide and potassium hydroxide. Also, the carboxy group-containing polymer may be previously neutralized.

The neutralizing agent is preferably used in the form of an aqueous neutralizing agent solution from the viewpoint of sufficiently and uniformly accelerating the neutralization of the carboxy groups of the carboxy group-containing polymer. From the same viewpoint as described above, the concentration of the aqueous neutralizing agent solution is preferably not less than 3% by mass, more preferably not less than 10% by mass and even more preferably not less than 15% by mass, and is also preferably not more than 50% by mass and more preferably not more than 25% by mass.

The neutralization degree of the carboxy groups of the carboxy group-containing polymer is preferably not less than 15 mol%, more preferably not less than 20 mol% and even more preferably not less than 25 mol%, and is also preferably not more than 80 mol%, more preferably not more than 70 mol%, even more preferably not more than 60 mol% and further even more preferably not more than 50 mol%, from the viewpoint of improving storage stability, ejection stability upon restarting the printing operation, and optical density of the resulting water-based ink.

The neutralization degree as used herein means a percent ratio (mol%) calculated by dividing a mole equivalent number of the neutralizing agent (alkali metal compound) by a mole equivalent number of the carboxy groups of the water-soluble polymer or the water-insoluble polymer, i.e., a percent ratio (mol%) expressed by the formula of [(mole equivalent number of neutralizing agent (alkali metal compound))/(mole equivalent number of carboxy groups of water-soluble polymer or water-insoluble polymer)]. Since the neutralization degree of the polymer as defined in the present invention is calculated from the mole equivalent number of the alkali metal compound, the neutralization degree will exceed 100 mol% if the alkali metal compound is used in an excessively large amount.

In addition, in the step 1, a volatile basic compound such as ammonia and the like may also be used in combination with the alkali metal compound.

### (Contents of Respective Components in Pigment Mixture)

The contents of the respective components in the pigment mixture are as follows from the viewpoint of improving ejection stability upon ink-jet printing and antibleeding properties of the resulting water-based ink.

The content of the pigment in the pigment mixture used in the step 1 is preferably not less than 5% by mass, more preferably not less than 10% by mass and even more preferably not less than 12.5% by mass, and is also preferably not more than 35% by mass, more preferably not more than 30% by mass and even more preferably not more than 20% by mass.

The content of the water-soluble polymer or the water-insoluble polymer in the pigment mixture is preferably not less than 1.0% by mass, more preferably not less than 2.0% by mass and even more preferably not less than 3.0% by mass, and is also preferably not more than 8.0% by mass, more preferably not more than 7.0% by mass and even more preferably not more than 6.0% by mass.

The content of the organic solvent in the pigment mixture is preferably not less than 4% by mass, more preferably not less than 5% by mass and even more preferably not less than 6% by mass, and is also preferably not more than 30% by mass, more preferably not more than 20% by mass and even more preferably not more than 15% by mass.

The content of water in the pigment mixture is preferably not less than 40% by mass, more preferably not less than 45% by mass and even more preferably not less than 50% by mass, and is also preferably not more than 90% by mass, more preferably not more than 85% by mass and even more preferably not more than 80% by mass.

The mass ratio of the pigment to the carboxy group-containing polymer [pigment/carboxy group-containing polymer] in the pigment mixture is preferably not less than 0.5, more preferably not less than 1.0 and even more preferably not less than 2.0, and is also preferably not more than 6.0, more preferably not more than 5.0 and even more preferably not more than 4.5, from the viewpoint of improving viscosity and storage stability of the resulting water-based ink.

### (Dispersion Treatment of Pigment Mixture)

In the step 1, the aforementioned pigment mixture is subjected to dispersion treatment to obtain the dispersion of the pigment-containing polymer particles. The dispersing method for obtaining the dispersion is not particularly limited. The pigment particles may be atomized into fine particles having a desired average particle size only by substantial dispersion treatment. However, it is preferred that the pigment mixture is first subjected to preliminary dispersion treatment, and then further subjected to the substantial dispersion treatment by applying a shear stress thereto so as to control the average particle size of the obtained pigment particles to a desired value.

The temperature used in the step 1, in particular, the temperature used in the preliminary dispersion treatment in the step 1, is preferably not lower than 0°C, and is also preferably not higher than 40°C, more preferably not higher than 30°C and even more preferably not higher than 25°C. The dispersing time is preferably not less than 0.5 hour and more preferably not less than 0.8 hour, and is also preferably not more than 30 hours, more preferably not more than 10 hours and even more preferably not more than 5 hours.

When subjecting the pigment mixture to the preliminary dispersion treatment, there may be used ordinary mixing and stirring devices such as anchor blades and disper blades, etc. Of these devices, preferred are high-speed stirring mixers.

As a means for applying a shear stress to the pigment mixture in the substantial dispersion treatment, there may be used, for example, kneading machines such as roll mills and kneaders, high-pressure homogenizers such as "MICROFLUIDIZER" available from Microfluidics Corporation, and media-type dispersers such as paint shakers and beads mills. Examples of the commercially available media-type dispersers include "Ultra Apex Mill" available from Kotobuki Industries Co., Ltd., "Pico Mill" available from Asada Iron Works Co., Ltd., and the like. These devices may be used in combination of any two or more thereof. Among these devices, the high-pressure homogenizers are preferably used from the viewpoint of reducing a particle size of the pigment.

In the case where the substantial dispersion treatment is conducted using the high-pressure homogenizer, the particle size of the pigment can be adjusted to a desired value by controlling the treating pressure and the number of passes through the high-pressure homogenizer.

The treating pressure used in the substantial dispersion treatment is preferably not less than 60 MPa, more preferably not less than 100 MPa and even more preferably not less than 130 MPa, and is also preferably not more than 200 MPa and more preferably not more than 180 MPa, from the viewpoint of enhancing productivity and cost efficiency.

Also, the number of passes through the high-pressure homogenizer used in the substantial dispersion treatment is preferably not less than 3 and more preferably not less than 10, and is also preferably not more than 30 and more preferably not more than 25.

### (Step 2)

The step 2 is the step of removing the organic solvent from the dispersion obtained in the step 1 to obtain a water dispersion of the pigment-containing polymer particles (pigment water dispersion).

In the step 2, by removing the organic solvent from the dispersion obtained in the step 1 by any known methods, it is possible to obtain the pigment water dispersion. It is preferred that the organic solvent is substantially completely removed from the thus obtained pigment water dispersion. However, the residual organic solvent may be present in the pigment water dispersion unless the objects and advantageous effects of the present invention are adversely affected by the residual organic solvent. The content of the residual organic solvent in the pigment water dispersion is preferably not more than 0.1% by mass and more preferably not more than 0.01% by mass.

In addition, if required, the dispersion may be subjected to heating and stirring treatments before removing the organic solvent therefrom by distillation.

In the thus-obtained pigment water dispersion, the pigment-containing polymer particles are dispersed in a dispersing medium containing water as a main medium. The configuration of the pigment-containing polymer particles in the pigment water dispersion is not particularly limited, and the pigment-containing polymer particles may have any configuration as long as the particles are formed of at least the pigment and the water-soluble polymer or the water-insoluble polymer. As described above, the particle configuration in which the pigment is enclosed or encapsulated in the water-insoluble polymer is preferred.

The concentration of non-volatile components in the resulting pigment water dispersion (solid content of the pigment water dispersion) is preferably not less than 10% by mass and more preferably not less than 15% by mass, and is also preferably not more than 30% by mass and more preferably not more than 25% by mass, from the viewpoint of improving dispersion stability of the pigment water dispersion as well as from the viewpoint of facilitating preparation of the water-based ink.

Meanwhile, the solid content of the pigment water dispersion may be measured by the method described in Examples below.

The average particle size of the pigment-containing polymer particles in the pigment water dispersion is preferably not less than 50 nm, more preferably not less than 60 nm and even more preferably not less than 70 nm, and is also preferably not more than 200 nm, more preferably not more than 160 nm and even more preferably not more than 120 nm, from the viewpoints of suppressing formation of coarse particles and improving ejection stability of the resulting water-based ink.

Meanwhile, the average particle size of the pigment-containing polymer particles may be measured by the method described in Examples below.

The average particle size of the pigment-containing polymer particles in the water-based ink is the same as the average particle size of the particles in pigment water dispersion, and the preferred ranges of the average particle size of the pigment-containing polymer particles in the water-based ink are also the same as those of the average particle size of the particles in pigment water dispersion.

The polymer used in the present invention may be in the form of a water-soluble polymer. Examples of commercially available products of the water-soluble polymer include "JONCRYL (registered trademark) 52J", "JONCRYL 57J", "JONCRYL 60J", "JONCRYL 61J", "JONCRYL 63J", "JONCRYL 70J", "JONCRYL 501J", "JONCRYL 683", "JONCRYL JDX-6180", "JONCRYL HPD-96J", "JONCRYL HPD-196", "JONCRYL PDX6102", "JONCRYL PDX6124", "JONCRYL PDX6137A", "JONCRYL 6610" and "JONCRYL 6500" all available from BASF Japan, Ltd., etc.

### <Water-Soluble Organic Solvent>

The water-soluble organic solvent may be used to improve ejection stability of the resulting water-based ink upon ink-jet printing and enhancing affinity of the polymer to a printing medium.

From the same viewpoint as described above, the water-soluble organic solvent contains at least one compound selected from the group consisting of a polyhydric alcohol and a polyhydric alcohol alkyl ether, and a total content of the polyhydric alcohol and the polyhydric alcohol alkyl ether in the resulting ink is not less than 18% by mass.

The boiling point of the polyhydric alcohol and the polyhydric alcohol alkyl ether (in terms of a weighted mean value of boiling points of the polyhydric alcohol and the polyhydric alcohol alkyl ether) is preferably not lower than 150°C and more preferably not lower than 160°C from the viewpoint of improving ejection stability of the resulting water-based ink, and is also preferably not higher than 250°C and more preferably not higher than 230°C from the viewpoint of improving drying properties of the water-based ink on a printing paper. The total content of the polyhydric alcohol and the polyhydric alcohol alkyl ether which have a boiling point of not higher than 250°C in the resulting water-based ink is preferably not less than 18% by mass and more preferably not less than 25% by mass.

Examples of the polyhydric alcohol include ethylene glycol, diethylene glycol, polyethylene glycol, propylene glycol, dipropylene glycol, polypropylene glycol, 1,3-propanediol, 1,3-butanediol, 1,4-butanediol, 3-methyl-1,3-butanediol, 1,5-pentanediol, 1,6-hexanediol, 2-methyl-2,4-pentanediol, 1,2,6-hexanetriol, 1,2,4-butanetriol, 1,2,3-butanetriol, petriol, etc. In addition, triethylene glycol (boiling point (b.p.) 285°C), tripropylene glycol (b.p. 273°C), glycerin (b.p. 290°C) and the like may be used in combination with the compound having a boiling point lower than 250°C, preferably the compound having a boiling point lower than 230°C. Among these polyhydric alcohols, preferred are ethylene glycol (b.p. 197°C), propylene glycol (b.p. 188°C) and diethylene glycol (b.p. 244°C), and more preferred are ethylene glycol and propylene glycol.

Examples of the polyhydric alcohol alkyl ether include ethylene glycol monoethyl ether, ethylene glycol monobutyl ether, diethylene glycol monomethyl ether, diethylene glycol monoethyl ether, diethylene glycol monoisopropyl ether, diethylene glycol monobutyl ether, triethylene glycol monomethyl ether, triethylene glycol monoisobutyl ether, tetraethylene glycol monomethyl ether, propylene glycol monoethyl ether, dipropylene glycol monobutyl ether, tripropylene glycol monobutyl ether, etc. In addition, triethylene glycol monobutyl ether (b.p. 276°C) and the like may be used in combination with the compound having a boiling point lower than 250°C, preferably the compound having a boiling point lower than 230°C. Among these polyhydric alcohol alkyl ethers, from the viewpoint of improving ejection stability of the resulting water-based ink as well as from the viewpoint of improving drying properties of the ink on a printing paper, preferred are diethylene glycol monoisopropyl ether and dipropylene glycol monomethyl ether, and more preferred is diethylene glycol monoisopropyl ether.

The water-soluble organic solvent may further contain the other organic solvent in addition to the aforementioned polyhydric alcohol and polyhydric alcohol alkyl ether. Examples of the other organic solvent include nitrogen-containing heterocyclic compounds, amides, amines, sulfur-containing compounds and the like. The other organic solvents are preferably kept in a liquid state under the environmental conditions at 25°C.

The water-based ink of the present invention may contain a plurality of organic solvents. The content of the organic solvents having a boiling point of higher than 250°C in the water-soluble organic solvent is preferably less than 10% by mass, more preferably not more than 5% by mass, even more preferably not more than 3% by mass, further even more preferably not more than 1% by mass and still further even more preferably 0% by mass. When the content of the organic solvents having a boiling point of higher than 250°C in the water-soluble organic solvent is increased, the resulting water-based ink tends to be deteriorated in fixing properties on a printing medium, water resistance and solvent resistance.

### <Formaldehyde-Releasing Compound>

The polymer emulsion and the water-based ink according to the present invention contain a formaldehyde-releasing compound. As the formaldehyde-releasing compound, there may be used a formaldehyde-releasing antiseptic agent. From the viewpoint of the improving storage stability of the resulting polymer emulsion or water-based ink, the formaldehyde-releasing compound may be used singly in the polymer emulsion or the water-based ink. However, from the viewpoint of improving antiseptic properties and/or antifungal properties of the resulting polymer emulsion or water-based ink, the formaldehyde-releasing compound may be used in combination with the other antiseptic agent.

Examples of the formaldehyde-releasing compound include formaldehyde, paraformaldehyde, alkanolamines, glycols, urea and condensation products of urea derivatives.

Of these compounds, preferred are those formaldehyde-releasing compounds having a hetero ring skeleton containing a nitrogen atom, specifically, preferred is at least one compound selected from the group consisting of a triazine compound and a hydantoin compound, and more preferred is at least one compound selected from the group consisting of 1,3,5-triazine-1,3,5-(2H, 4H, 6H)-tris(ethanol), 1,3-bis(hydroxymethyl)-5,5-dimethyl hydantoin and cis-1-(3-chloroallyl)-3,5,7-triaza-1-azonia adamantane chloride.

Incidentally, the triazine compound as used herein means a compound having a triazine skeleton or a skeleton induced from triazine (for example, such as cyclotrimethylenetriamine, 3,5,7-triaza-1-azonia adamantane and the like), and the hydantoin compound as used herein means a compound having a hydantoin skeleton or a skeleton induced from hydantoin.

### [Production of Polymer Emulsion]

The polymer emulsion of the present invention may be obtained by mixing the aforementioned polymer and formalin-releasing compound, and water.

### [Production of Water-Based Ink]

The water-based ink of the present invention may be produced by the method in which after producing the water dispersion of the polymer particles containing the pigment (pigment-containing polymer particles) by the process including the aforementioned steps 1 and 2, or after mixing the polymer that contains the constitutional unit derived from the aforementioned component (a) and the constitutional unit derived from the aforementioned component (b) in the main chain thereof, and has an acid value of not less than 150 mgKOH/g and not more than 300 mgKOH/g, with the pigment, the aforementioned water-soluble organic solvent, the aforementioned formalin-releasing compound and water are compounded in the resulting water dispersion or mixture.

In addition, the water-based ink may be further compounded, if required, with various additives that may be usually used in water-based inks, e.g., a surfactant such as a nonionic surfactant and the like, a pH controller such as amines and the like, a chelating agent, a viscosity controller, a defoaming agent, a rust preventive and an antioxidant, etc. Furthermore, the resulting water-based ink may also be subjected to filtration treatment through a filter, etc.

### <Contents of Respective Components in Polymer Emulsion>

### (Content of Polymer)

The content of the polymer in the polymer emulsion is preferably not less than 15% by mass, more preferably not less than 20% by mass and even more preferably not less than 30% by mass from the viewpoint of improving rub fastness of the resulting polymer emulsion even when formed into a coating film or even when printed on a low-liquid absorbing printing medium, and is also preferably not more than 60% by mass, more preferably not more than 50% by mass and even more preferably not more than 45% by mass from the viewpoint of improving storage stability of the polymer emulsion.

### (Content of Formaldehyde-Releasing Compound)

The content of the formaldehyde-releasing compound in the polymer emulsion is preferably not less than 30 ppm and more preferably not less than 50 ppm, and is even more preferably not less than 130 ppm, further even more preferably not less than 150 ppm, still further even more preferably not less than 170 ppm and furthermore preferably not less than 190 ppm from the viewpoint of allowing the compound to fully exhibit its antiseptic and antifungal effects, and is also preferably not more than 1000 ppm, more preferably not more than 800 ppm and even more preferably not more than 600 ppm from the viewpoint of improving rub fastness of the resulting polymer emulsion.

### (Content of Water)

The content of water in the polymer emulsion is preferably not less than 45% by mass, more preferably not less than 50% by mass and even more preferably not less than 55% by mass, and is also preferably not more than 85% by mass, more preferably not more than 80% by mass and even more preferably not more than 75% by mass from the viewpoint of improving rub fastness of the resulting polymer emulsion even when formed into a coating film or even when printed on a low-liquid absorbing printing medium.

The polymer emulsion preferably contains no colorant such as a pigment, etc., from the viewpoint of using the polymer emulsion as a raw material of a colorless film-forming agent or as a raw material of the water-based ink which is to be compounded in the ink together with the colorant.

### <Contents of Respective Components in Water-Based Ink>

### (Content of Pigment)

The content of the pigment in the water-based ink is preferably not less than 1.0% by mass, more preferably not less than 2.0% by mass and even more preferably not less than 2.5% by mass from the viewpoint of enhancing optical density of the water-based ink upon printing. Also, the content of the pigment in the water-based ink is preferably not more than 15.0% by mass, more preferably not more than 10.0% by mass and even more preferably not more than 7.0% by mass from the viewpoint of reducing viscosity of the resulting water-based ink upon volatilizing the solvent therefrom and improving storage stability of the water-based ink.

### (Total Content of Pigment and Polymer Particles)

The total content of the pigment and the polymer in the water-based ink is preferably not less than 2.0% by mass, more preferably not less than 2.5% by mass, even more preferably not less than 3.0% by mass and further even more preferably not less than 3.5% by mass, and is also preferably not more than 17.0% by mass, more preferably not more than 12.0% by mass, even more preferably not more than 10.0% by mass and further even more preferably not more than 8.0% by mass, from the viewpoint of improving ejection stability and storage stability of the resulting water-based ink.

### (Content of Water-Soluble Organic Solvent)

The content of the water-soluble organic solvent in the water-based ink is preferably not less than 15% by mass, more preferably not less than 20% by mass and even more preferably not less than 30% by mass on the basis of a total amount of water and the water-soluble organic solvent from the viewpoint of improving ejection stability of the resulting water-based ink and enhancing optical density of the ink upon printing. Also, the content of the water-soluble organic solvent in the water-based ink is preferably not more than 60% by mass, more preferably not more than 50% by mass and even more preferably not more than 45% by mass on the basis of a total amount of water and the water-soluble organic solvent from the viewpoint of improving storage stability of the resulting water-based ink.

The total content of the polyhydric alcohol and the polyhydric alcohol alkyl ether in the water-based ink is preferably not less than 18% by mass and more preferably not less than 25% by mass, and is also preferably not more than 55% by mass, more preferably not more than 45% by mass and even more preferably not more than 40% by mass, from the viewpoint of improving ejection stability of the resulting water-based ink.

The content of propylene glycol in the water-based ink is preferably not less than 10% by mass, more preferably not less than 13% by mass, even more preferably not less than 17% by mass, further even more preferably not less than 18% by mass and still further even more preferably not less than 25% by mass, and is also preferably not more than 55% by mass, more preferably not more than 45% by mass and even more preferably not more than 40% by mass, from the viewpoint of improving ejection stability of the resulting water-based ink and enhancing optical density of the ink upon printing.

### (Content of Formaldehyde-Releasing Compound)

The content of the formaldehyde-releasing compound in the water-based ink is preferably not less than 30 ppm and more preferably not less than 50 ppm, and is even more preferably not less than 130 ppm, further even more preferably not less than 150 ppm, still further even more preferably not less than 170 ppm and furthermore preferably not less than 190 ppm from the viewpoint of allowing the compound to fully exhibit its antiseptic and antifungal effects, and is also preferably not more than 1000 ppm, more preferably not more than 800 ppm and even more preferably not more than 600 ppm from the viewpoint of improving ejection stability of the resulting water-based ink.

### (Content of Water)

The content of water in the water-based ink is preferably not less than 45% by mass, more preferably not less than 50% by mass and even more preferably not less than 55% by mass, and is also preferably not more than 85% by mass, more preferably not more than 80% by mass and even more preferably not more than 75% by mass, from the viewpoint of reducing an amount of organic solvents used therein as well as from the viewpoint of improving ejection stability of the resulting water-based ink. Meanwhile, as the water used in the water-based ink, preferred are pure water and ultrapure water such as ion-exchanged water and distilled water.

### (Properties of Water-Based Ink)

The viscosity of the water-based ink as measured at 32°C is preferably not less than 2.0 mPa•s, more preferably not less than 3.0 mPa•s and even more preferably not less than 5.0 mPa•s, and is also preferably not more than 12 mPa•s, more preferably not more than 9.0 mPa•s and even more preferably not more than 7.0 mPa•s, from the viewpoint of further improving storage stability of the resulting water-based ink.

The pH value of the water-based ink is preferably not less than 7.0, more preferably not less than 7.2 and even more preferably not less than 7.5 from the viewpoint of further improving storage stability of the resulting water-based ink, and is also preferably not more than 11.0, more preferably not more than 10.0 and even more preferably 9.5 from the viewpoint of improving resistance of members to the water-based ink and suppressing skin irritation.

### [Ink-Jet Printing]

The water-based ink according to the present invention may be loaded to a conventionally known ink-jet printing apparatus to eject droplets of the ink onto a printing medium, so that it is possible to print characters or images, etc., on the printing medium.

The ink-jet printing apparatus may be any of a continuous injection type (a charge-controlling type, a spray type, etc.), an on-demand type (a piezoelectric type, a thermal type, an electrostatic attraction type, etc.) and the like. It is more preferred that the water-based ink of the present invention is used as a water-based ink for ink-jet printing using a piezoelectric type ink-jet printing apparatus.

Examples of the printing medium usable in the present invention include a high-liquid absorbing plain paper, and a low-liquid absorbing coated paper and a low-liquid absorbing resin film.

According to the present invention, it is possible to obtain printed materials having excellent rub fastness even when printing characters or images with the water-based ink on a low-liquid absorbing printing medium whose water absorption as measured by contacting the printing medium with pure water for 100 milliseconds is not less than 0 g/m² and not more than 10 g/m², preferably not less than 0 g/m² and not more than 6 g/m². Meanwhile, the aforementioned water absorption of the low-liquid absorbing printing medium may be measured using an automatic scanning absorptometer by the method described in Examples below.

Examples of the coated paper include a general-purpose glossy coated paper "OK Topcoat Plus" (basis weight: 104.7 g/m²; water absorption as measured by contacting the printing medium with pure water for 100 milliseconds (hereinafter defined in the same way): 4.9 g/m²) available from Oji Paper Co., Ltd., a multi-color foam glossy coated paper (104.7 g/m²; water absorption: 5.2 g/m²) available from Oji Paper Co., Ltd., "UPM Finesse Gloss" (115 g/m²; water absorption: 3.1 g/m²) available from UPM, and the like.

As the resin film, there may be used a transparent synthetic resin film. Examples of the transparent synthetic resin film include a polyester film, a polypropylene film, a polyethylene film, a nylon film, a polyvinyl chloride film and the like. These resin films may be in the form of either a biaxially oriented film, a monoaxially oriented film or a non-oriented film. Among these films, more preferred are a polyester film such as a polyethylene terephthalate (PET) film subjected to corona discharge treatment, etc., and an oriented polypropylene film such as a biaxially oriented polypropylene (OPP) film subjected to corona discharge treatment, etc.

Examples of commercially available products of the resin film include "LUMIRROR T60" (PET) available from Toray Industries, Inc., "TAIKO FE2001" (corona discharge-treated PET) available from Futamura Chemical Co, Ltd., "TAIKO FOR-AQ" (corona discharge-treated OPP) available from Futamura Chemical Co, Ltd., "PVC80B P" (polyvinyl chloride) available from Lintec Corporation, "KINATH KEE 70CA" (polyethylene) available from Lintec Corporation, "YUPO SG90 PAT1" (PP) available from Lintec Corporation, and the like.

### EXAMPLES

In the following Preparation Examples, Production Examples, Examples and Comparative Examples, the "part(s)" and "%" indicate "part(s) by mass" and "% by mass", respectively, unless otherwise specified. Meanwhile, various properties were measured and evaluated by the following methods.

### (1) Measurement of Number-Average Molecular Weight of Polymer

The number-average molecular weight of the polymer was measured by gel chromatography [GPC apparatus: "HLC-8120GPC" available from Tosoh Corporation; columns: "TSK-GEL, α-M" x 2 available from Tosoh Corporation; flow rate: 1 mL/min] using a solution prepared by dissolving phosphoric acid (guaranteed reagent) available from Wako Pure Chemical Industries, Ltd., and lithium bromide (reagent) available from Tokyo Chemical Industry Co., Ltd., in *N,N*-dimethylformamide (for high-performance liquid chromatography) available from Wako Pure Chemical Industries, Ltd., such that concentrations of phosphoric acid and lithium bromide in the resulting solution were 60 mmol/L and 50 mmol/L, respectively, as an eluent, and using monodisperse polystyrenes having previously known molecular weights as a reference standard substance.

### (2) Acid Value of Polymer

The acid value of the polymer was measured by the same method as prescribed in JIS K0070 except that a mixed solvent containing acetone and toluene at a volume ratio [acetone: toluene] of 1:1 was used as a solvent for the measurement in place of a mixed solvent containing ethanol and ether.

### (3) Measurement of Glass Transition Temperature (Tg) of Polymer

### (3-1) Preparation of Test Sample

Using freeze dryers "FDU-2100" and "DRC-1000" (tradenames) both available from TOKYO RIKAKIKAI CO., LTD., 1 g of a water-based pigment dispersion was vacuum-dried at -25°C for 1 hour, at -10°C for 10 hours and at 25°C for 4 hours successively until a water content of the water-based pigment dispersion was reduced to 1% or less, thereby obtaining a powdered sample.

### (3-2) Measurement of Glass Transition Temperature

Using a differential scanning calorimeter "Q-100" available from TA Instruments Japan Inc., the obtained sample was weighed in an amount of 0.01 to 0.02 g in an aluminum pan, heated to 200°C and then cooled from 200°C to 0°C at a temperature drop rate of 10°C/minute, and then the sample was further heated to 150°C at a temperature rise rate of 10°C/minute to measure and prepare an endothermic curve thereof. The temperature at which an extension of a baseline below an endothermic maximum peak temperature in the curve was intersected with a tangential line having a maximum inclination of the curve in the range of from a rise-up portion of the peak to an apex of the peak was read as a glass transition temperature of the sample.

### (4) Measurement of Solid Content of Pigment Water Dispersion

Sodium sulfate dried to constant weight in a desiccator was weighed and charged in an amount of 10.0 g into a 30 mL polypropylene container (φ: 40 mm; height: 30 mm), and about 1.0 g of a sample to be measured was added to the container. The contents of the container were mixed and then accurately weighed. The resulting mixture was maintained in the container at 105°C for 2 hours to remove volatile components therefrom, and further allowed to stand in a desiccator for 15 minutes to measure a mass thereof. The mass of the sample after removing the volatile components therefrom was regarded as a mass of solids therein. The solid content of the sample was calculated by dividing the mass of the solids by the mass of the sample initially added.

### (5) Measurement of Water Absorption of Printing Medium

The water absorption of a printing medium as measured by contacting the printing medium with pure water for 100 milliseconds was determined as follows. That is, using an automatic scanning absorptometer "KM500win" available from Kumagai Riki Kogyo Co., Ltd., an amount of pure water transferred to the printing medium when allowing the printing medium to contact with pure water at 23°C under a relative humidity of 50% for 100 milliseconds was measured. The measuring conditions are as follows.

### "Spiral Method"

Contact time: 0.010 to 1.0 (sec)
Pitch (mm): 7
Length Per Sampling (degree): 86.29
Start Radius (mm): 20
End Radius (mm): 60
Min Contact Time (ms): 10
Max Contact Time (ms): 1000
Sampling Pattern (1-50): 50
Number of Sampling Points (>0): 19

### "Square Head"

Split Span (mm): 1
Split Width (mm): 5

### <Preparation of Polymer>

### Preparation Example 1

Seventy four parts of methacrylic acid available from Wako Pure Chemical Industries, Ltd., 66 parts of styrene available from Wako Pure Chemical Industries, Ltd., 40 parts of a styrene macromer "AS-6S" (tradename; number-average molecular weight: 6000; solid content: 50%; amount of solid components: 20 parts) available from Toagosei Co., Ltd., and 40 parts of polypropylene glycol monomethacrylate "BLEMMER PP-800" (tradename; average molar number of addition of propyleneoxide: 13; end group: hydroxy group) available from NOF Corporation were mixed to prepare a monomer mixture solution. Twenty parts of methyl ethyl ketone (MEK) and 0.3 part of 2-mercaptoethanol as a chain transfer agent as well as 10% of the monomer mixture solution prepared above were charged into a reaction vessel and mixed with each other, and then an inside atmosphere of the reaction vessel was fully replaced with nitrogen gas.

On the other hand, a mixed solution prepared by mixing remaining 90% of the monomer mixture solution, 0.27 part of the aforementioned chain transfer agent, 60 parts of MEK and 2.2 parts of an azo-based radical polymerization initiator "V-65" (tradename; 2,2'-azobis(2,4-dimethylvaleronitrile)) available from Wako Pure Chemical Industries, Ltd., was charged into a dropping funnel. In a nitrogen atmosphere, the monomer mixture solution in the reaction vessel was heated to 65°C while stirring, and then the mixed solution in the dropping funnel was added dropwise thereinto over 3 hours. After the elapse of 2 hours from completion of the dropwise addition while maintaining the resulting mixed solution at 65°C, a solution prepared by dissolving 0.3 part of the aforementioned polymerization initiator in 5 parts of MEK was added to the mixed solution, and the resulting reaction solution was further aged at 65°C for 2 hours and then at 70°C for 2 hours to thereby obtain a carboxy group-containing polymer solution (i) (number-average molecular weight of the polymer: 12000; acid value: 240 mgKOH/g; Tg: 85°C).

### Preparation Examples 2 to 5

The same procedure as in Preparation Example 1 was repeated except that the amounts of the respective monomer components were changed to those shown in Table 1, thereby obtaining carboxy group-containing water-insoluble polymer solutions (ii) to (v). The results are shown in Table 1.

**TABLE 1**

| | Preparation Examples | | | | |
|---|---|---|---|---|---|
| | 1 | 2 | 3 | 4 | 5 |
| Polymer solution | (i)* | (ii)* | (iii)* | (iv) | (v) |
| Monomers | | | | | |
| (a) Methacrylic acid (part(s)) | 74 | 61 | 49 | 40 | 26 |
| (b) Styrene (part(s)) | 66 | 79 | 91 | 100 | 114 |
| (c) Styrene macromer (part(s)) | 20 | 20 | 20 | 20 | 20 |
| (d) "BLEMMER PP-800" (part(s)) | 40 | 40 | 40 | 40 | 40 |

| Compositional ratio | | | | | |
|---|---|---|---|---|---|
| Content of component (a) (%) | 37.0 | 30.5 | 24.5 | 20.0 | 13.0 |
| Content of component (b) (%) | 33.0 | 39.5 | 45.5 | 50.0 | 57.0 |
| Mass ratio of [(a)/(b)] | 1.12 | 0.77 | 0.54 | 0.40 | 0.23 |
| Mass ratio of (a)/[(b)+(c)] | 0.86 | 0.61 | 0.44 | 0.33 | 0.19 |

| Results | | | | | |
|---|---|---|---|---|---|
| Number-average molecular weight | 12000 | 12000 | 12000 | 12000 | 12000 |
| Acid value (mgKOH/g) | 240 | 200 | 160 | 128 | 85 |
| Glass transition temperature (°C) | 85 | 77 | 72 | 69 | 63 |

| | | | | | |
|---|---|---|---|---|---|
| Note *: Polymer solutions used in Examples. | | | | | |

### <Production of Polymer Emulsion>

### Production Example I-1

Twenty parts of the polymer produced by drying the polymer solution (i) obtained in Preparation Example 1 under reduced pressure were mixed in 8.1 parts of a 5N sodium hydroxide aqueous solution (sodium hydroxide solid content: 16.9%; for volumetric titration) available from Wako Pure Chemical Industries, Ltd., to neutralize the polymer such that the ratio of the number of moles of sodium hydroxide to the number of moles of carboxy groups of the polymer was 40% (neutralization degree: 40%), followed by further adding ion-exchanged water to the resulting solution to adjust a whole amount of the solution to 100 parts. Furthermore, the thus obtained dispersion was stirred at 90°C for 6 hours using an agitation blade while operating the agitation blade at a rotating speed of 300 rpm, thereby obtaining a water dispersion liquid of the polymer having a solid content of 20%.

The thus obtained water dispersion liquid was subjected to dispersion treatment under a pressure of 200 MPa using "Microfluidizer" (tradename) available from Microfluidics Corporation by passing the dispersion liquid through the device 10 times. The thus obtained dispersion liquid was mixed with 250 parts of ion-exchanged water and stirred together, and then allowed to stand at 60°C under reduced pressure to completely remove MEK therefrom, followed by further removing a part of water therefrom. The resulting dispersion was subjected to filtration treatment using a 25 mL-capacity needleless syringe available from Terumo Corporation fitted with a 5 µm-mesh filter (acetyl cellulose membrane; outer diameter: 2.5 cm) available from FUJIFILM Corporation to remove coarse particles therefrom, thereby obtaining a polymer emulsion 1 having a solid content of 20%.

### Production Examples I-2 to I-5

The same procedure as in Production Example I-1 was repeated except for using 20 parts of the polymer produced by drying each of the polymer solutions (ii) to (v) obtained in Preparation Examples 2 to 5 under reduced pressure, respectively, in place of the polymer solution (i) obtained in Preparation Example 1, and replacing 10.1 parts of the 5N sodium hydroxide aqueous solution (sodium hydroxide solid content: 16.9%; for volumetric titration) available from Wako Pure Chemical Industries, Ltd., with 8.4 parts thereof (neutralization degree: 40%), 6.7 parts thereof (neutralization degree: 40%), 5.4 parts thereof (neutralization degree: 40%) or 3.6 parts thereof (neutralization degree: 40%), thereby obtaining polymer emulsions 2 to 5.

### <Production of Polymer Coating Solutions>

### Example I-1

Two parts of an ether-based nonionic surfactant "EMULGEN 120" (tradename) available from Kao Corporation, 30 parts of propylene glycol and 0.02 part of a formaldehyde-releasing compound "dowicil 150" available from Dow Chemical Company were added to 50 parts of the polymer emulsion 1, and further ion-exchanged water was added to the resulting mixture to adjust a whole amount of the mixture to 100 parts. The thus obtained mixture was mixed for 30 minutes, and then subjected to filtration treatment through a 1.2 µm-mesh filter "MAP-010XS" available from ROKI TECHNO CO., LTD., thereby obtaining a polymer coating solution 1.

### Examples I-2 to I-9 and Comparative Examples I-1 to I-5

The same procedure as in Example I-1 was repeated except that the respective components compounded were changed to those shown in Table 2, thereby obtaining polymer coating solutions 2 to 14.

Incidentally, the details of the formaldehyde-releasing compounds, etc., shown in Table 2 are as follows.
- dowicil 150: *Cis*-1-(3-chloroallyl)-3,5,7-triaza-1-azonia adamantane chloride (active ingredient content: 96%) available from Dow Chemical Company
- DMDMH: 1,3-Bis(hydroxymethyl)-5,5-dimethyl hydantoin (active ingredient content: 100%) available from Fluorochem Ltd.
- Grotan BK: 1,3,5-Triazine-1,3,5-(2H, 4H, 6H)-tris(ethanol) (active ingredient content: 100%) available from Fluorochem Ltd.
- Ploxel LVS: 1,2-Benzisothiazolin-3-one (BIT) (active ingredient content: 20%) available from Arch Chemicals Japan, Inc.
- Kathon CG: 2-Methyl-isothiazolin-3-one (active ingredient content: 1.5%) available from Dow Chemical Company

### <Evaluation of Polymer Coating Solutions 1 to 14>

The above-obtained polymer coating solutions 1 to 14 were evaluated with respect to rub fastness and antiseptic and antifungal properties thereof by the following methods. The results are shown in Table 2.

### (1) Formation of Polymer Coating film

The polymer coating solutions 1 to 14 were respectively applied to a substantially whole surface of a corona discharge-treated OPP film "FOS-AQ #50" available from Futamura Chemical Co, Ltd., using a bar coater (#5) such that a thickness of the resulting coating film was 11 µm. Thereafter, the resulting coating film formed on the OPP film was placed in a hot air dryer "PH-202" available from Espec Corporation set to 60°C, for 10 minutes to dry and remove the solvent therefrom, thereby obtaining a polymer coating film (having a thickness of 11 µm).

### (2) Evaluation of Rub Fastness

The polymer coating film obtained in the above item (1) was subjected to a rub fastness test in which a cloth "BEMCOT" wound around a 450 g weight was placed on the polymer coating film, and reciprocatively moved thereover 50 times to rub the surface of the polymer coating film therewith.

The polymer coating film after the rub fastness test was visually observed to evaluate rub fastness of the polymer coating film according to the following evaluation ratings.

### (Evaluation Ratings)

4: No flaws owing to the rubbing were visually observed on the polymer coating film, and therefore the polymer coating film was still maintained in a very good state.
3: Some flaws owing to the rubbing were visually observed on the polymer coating film, but posed no significant problems.
2: Flaws owing to the rubbing were visually observed on the polymer coating film such that less than 5% of a surface area of the underlying OPP film beneath the polymer coating film was exposed, and therefore posed certain problems.
1: Not less than 5% of a surface area of the underlying OPP film beneath the polymer coating film was exposed, and therefore posed significant problems.

If the evaluation rating was Rank 4 or 3, the rub fastness of the polymer coating film was acceptable even when used in practical applications.

### (3) Evaluation of Antiseptic and Antifungal Properties

Twenty milliliters (20 mL) of the polymer coating solution as a test sample to be measured were inoculated with a fungus liquid (Pseudomonas aeruginosa, Staphylococcus aureus and Escherichia coli) such that an amount of the fungi inoculated was 1 x 106 CFU/mL, and the resulting solution was allowed to stand at room temperature, so that the test sample and the fungi were brought into contact with each other for a predetermined time.

The number of the fungi present in the solution was measured over time, and the antiseptic and antifungal properties of the test sample were evaluated by the change in number of the fungi present in the solution.

The number of the fungi present in the solution was measured as follows. That is, 0.1 mL of the solution separated from the test sample was applied onto an SCD (soybean-casein digest) agar medium "DAIGO" available from Wako Pure Chemical Industries, Ltd., and cultivated at 32.5°C for 2 days to obtain colonies of the fungi, and the number of the fungi still remaining alive was determined from the number of the colonies thus obtained. The difference between a logarithmic value of an incipient number of the fungi and a logarithmic value of the number of the remaining viable fungi was calculated as the number of Log of fungal decay. The antiseptic and antifungal properties of the test sample was evaluated according to the following evaluation ratings.

### (Evaluation Ratings)

4: After the elapse of 1 day from the inoculation, not less than 4Log was reduced.
3: After the elapse of 3 days from the inoculation, not less than 4Log was reduced.
2: After the elapse of 7 days from the inoculation, not less than 4Log was reduced.
1: After the elapse of 7 days from the inoculation, less than 4Log was reduced, or no reduction in Log number occurred.

If the evaluation rating was Rank 4 or 3, the antiseptic and antifungal properties of the test sample were acceptable when used in practical applications.

**TABLE 2-1**

| | | | Examples | | | | | | | | | Comparative Examples | | | | |
|---|---|---|---|---|---|---|---|---|---|---|---|---|---|---|---|---|
| | | | I-1 | I-2 | I-3 | I-4 | I-5 | I-6 | I-7 | I-8 | I-9 | I-1 | I-2 | I-3 | I-4 | I-5 |
| No. of polymer coating solution | | | 1 | 2 | 3 | 4 | 5 | 6 | 7 | 8 | 9 | 10 | 11 | 12 | 13 | 14 |
| Composition of polymer coating solution (part(s)) | Polymer emulsion 1 (240)* | | 50 | 50 | 50 | 50 | 50 | 50 | 50 | | | 50 | 50 | | | |
| | Polymer emulsion 2 (200)* | | | | | | | | | 50 | | | | | | |
| | Polymer emulsion 3 (160)* | | | | | | | | | | 50 | | | | | |
| | Polymer emulsion 4 (128)* | | | | | | | | | | | | | 50 | | |
| | Polymer emulsion 5 (85)* | | | | | | | | | | | | | | 50 | 50 |
| | Surfactant | EMULGEN 120 | 2 | 2 | 2 | 2 | 2 | 2 | 2 | 2 | 2 | 2 | 2 | 2 | 2 | 2 |
| | Water-soluble organic solvent | Propylene glycol | 30 | 30 | 30 | 30 | 30 | 30 | 30 | 30 | 30 | 30 | 30 | 30 | 30 | 30 |

| | | | | | | | | | | | | | | | | |
|---|---|---|---|---|---|---|---|---|---|---|---|---|---|---|---|---|
| Note *: Numerical values in the parentheses are acid values (mgKOH/g) of polymers used. | | | | | | | | | | | | | | | | |

**TABLE 2-2**

| | | | Examples | | | | | | | | | Comparative Examples | | | | |
|---|---|---|---|---|---|---|---|---|---|---|---|---|---|---|---|---|
| | | | I-1 | I-2 | I-3 | I-4 | I-5 | I-6 | I-7 | I-8 | I-9 | I-1 | I-2 | I-3 | I-4 | I-5 |
| Composition of polymer coating solution (part(s)) | Formaldehyde -releasing compound, etc. | dowicil 150 | 0.02 | | | 0.005 | 0.01 | 0.05 | 0.10 | 0.02 | 0.02 | | | 0.02 | 0.02 | |
| | | DMDMH | | 0.02 | | | | | | | | | | | | |
| | | Grotan BK | | | 0.02 | | | | | | | | | | | |
| | | Ploxel LVS | | | | | | | | | | 0.02 | | | | |
| | | Kathon CG | | | | | | | | | | | 0.02 | | | |
| | Ion-exchanged water (q.s. to adjust a whole amount to 100%) | | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ |
| Evaluation results | Rub fastness | | 4 | 4 | 4 | 3 | 3 | 4 | 3 | 4 | 3 | 2 | 2 | 2 | 2 | 1 |
| | Antiseptic and antifungal properties | | 4 | 4 | 4 | 2 | 3 | 4 | 4 | 4 | 4 | 4 | 4 | 4 | 4 | 1 |

| | | | | | | | | | | | | | | | | |
|---|---|---|---|---|---|---|---|---|---|---|---|---|---|---|---|---|
| Note *1: Balance | | | | | | | | | | | | | | | | |

As is apparent from the evaluation results shown in Table 2, it was confirmed that the polymer coating films prepared from the respective polymer coating solutions of Examples I-1 to I-9 containing the polymer emulsions of the present invention were excellent in rub fastness.

On the other hand, it was confirmed that the polymer coating films prepared from the respective polymer coating solutions of Comparative Examples I-1 and I-2 using the antiseptic agents other than the formaldehyde-releasing compound were deteriorated in rub fastness, and the polymer coating films prepared from the respective polymer coating solutions of Comparative Examples I-3 and I-4 using the polymer particles having an acid value of less than 150 mgKOH/g were also deteriorated in rub fastness.

Meanwhile, it was confirmed that although the polymer coating solution of Example I-4 having a formaldehyde-releasing compound content of 50 ppm was deteriorated in antiseptic and antifungal properties (antiseptic and antifungal effects), the polymer coating film prepared from the polymer coating solution exhibited good rub fastness. The polymer coating solution containing such a polymer emulsion can be properly used in the applications not necessarily requiring high antiseptic and antifungal properties.

### <Production of Water-Based Inks>

### Example I-11

After producing the polymer emulsion 1 in Production Example I-1, 40 parts of a carbon black "MONARCH 800" (tradename) as a black pigment available from Cabot Corporation were added to 20 parts of the polymer emulsion 1, and the resulting mixture was subjected to dispersion treatment using "Microfluidizer", thereby obtaining a water dispersion liquid in which the pigment was dispersed with the polymer emulsion 1. Two parts of an ether-based nonionic surfactant "EMULGEN 120" (tradename) available from Kao Corporation, 30 parts of propylene glycol and 0.02 part of a formaldehyde-releasing compound "dowicil 150" available from Dow Chemical Company were added to the aforementioned water dispersion liquid (polymer emulsion 1: 20 parts; black pigment: 40 parts), and further ion-exchanged water was added to the resulting mixture to adjust a whole amount of the mixture to 100 parts. The thus obtained mixture was mixed for 30 minutes, and then subjected to filtration treatment through a 1.2 µm-mesh filter "MAP-010XS" available from ROKI TECHNO CO., LTD., thereby obtaining a water-based ink I-1.

### Examples I-12 to I-19 and Comparative Examples I-6 to I-10

The same procedure as in Example I-1 was repeated except that the respective components compounded were changed to those shown in Table 3, thereby obtaining water-based inks I-2 to I-14.

Incidentally, the details of the formaldehyde-releasing compounds, etc., shown in Table 3 are as described previously.

### <Evaluation of Water-Based Inks I-1 to I-14>

The rub fastness and antiseptic and antifungal properties of the water-based inks I-1 to I-14 obtained above were evaluated by the following methods. The results are shown in Table 3.

### (1) Evaluation of Rub Fastness

The respective water-based inks produced above were loaded to an ink cartridge of a commercially available ink-jet printer (piezoelectric type; equipped with a 30 kHz print head) available from Trytech Co., Ltd., to conduct Duty 100% printing on a coated paper "OK Topcoat Plus" (tradename; water absorption: 4.9 g/m²) available from Oji Paper Co., Ltd., at a temperature of 23°C and a relative humidity of 50%.

Next, the resulting printed material was subjected to a rub fastness test in which a cloth "BEMCOT" wound around a 450 g weight was placed on the printed material, and reciprocatively moved thereover 50 times to rub the surface of the printed material therewith. The printed material after the rub fastness test was visually observed to evaluate rub fastness of the respective water-based inks according to the following evaluation ratings.

### (Evaluation Ratings)

4: No flaws owing to the rubbing were visually observed on the printed material, and the printed material was still maintained in a very good state.
3: Some flaws owing to the rubbing were visually observed on the printed material, but posed no significant problems.
2: Flaws owing to the rubbing were visually observed on the printed material such that less than 5% of a surface area of the underlying coated paper was exposed, and therefore posed certain problems.
1: Not less than 5% of a surface area of the underlying coated paper was exposed, and therefore posed significant problems.

If the evaluation rating was Rank 4 or 3, the rub fastness of the respective water-based inks was acceptable even when used in practical applications.

### (3) Evaluation of Antiseptic and Antifungal Properties

Twenty milliliters (20 mL) of the water-based ink as a test sample to be measured were inoculated with a fungus liquid (Pseudomonas aeruginosa, Staphylococcus aureus and Escherichia coli) such that an amount of the fungi inoculated was 1 x 106 CFU/mL, and the resulting solution was allowed to stand at room temperature, so that the test sample and the fungi were brought into contact with each other for a predetermined time.

The number of the fungi present in the solution was measured over time, and the antiseptic and antifungal properties of the test sample were evaluated by the change in number of the fungi present in the solution.

The number of the fungi present in the solution was measured as follows. That is, 0.1 mL of the solution separated from the test sample was applied onto an SCD (soybean-casein digest) agar medium "DAIGO" available from Wako Pure Chemical Industries, Ltd., and cultivated at 32.5°C for 2 days to obtain colonies of the fungi, and the number of the fungi still remaining alive was determined from the number of the colonies thus obtained. The difference between a logarithmic value of an incipient number of the fungi and a logarithmic value of the number of the remaining viable fungi was calculated as the number of Log of fungal decay. The antiseptic and antifungal properties of the test sample was evaluated according to the following evaluation ratings.

### (Evaluation Ratings)

4: After the elapse of 1 day from the inoculation, not less than 4Log was reduced.
3: After the elapse of 3 days from the inoculation, not less than 4Log was reduced.
2: After the elapse of 7 days from the inoculation, not less than 4Log was reduced.
1: After the elapse of 7 days from the inoculation, less than 4Log was reduced, or no reduction in Log number occurred.

If the evaluation rating was Rank 4 or 3, the antiseptic and antifungal properties of the test sample were acceptable when used in practical applications.

**TABLE 3-1**

| | | | Examples | | | | | | | | | Comparative Examples | | | | |
|---|---|---|---|---|---|---|---|---|---|---|---|---|---|---|---|---|
| | | | I-11 | I-12 | I-13 | I-14 | I-15 | I-16 | I-17 | I-18 | I-19 | I-6 | I-7 | I-8 | I-9 | I-10 |
| No. of water-based ink | | | I-1 | I-2 | I-3 | I-4 | I-5 | I-6 | I-7 | I-8 | I-9 | I-10 | I-11 | I-12 | I-13 | I-14 |
| Composition of water-based ink (part(s)) | Black pigment (carbon black) | | 40 | 40 | 40 | 40 | 40 | 40 | 40 | 40 | 40 | 40 | 40 | 40 | 40 | 40 |
| | Polymer emulsion 1 (240)* | | 20 | 20 | 20 | 20 | 20 | 20 | 20 | | | 20 | 20 | | | |
| | Polymer emulsion 2 (200)* | | | | | | | | | 20 | | | | | | |
| | Polymer emulsion 3 (160)* | | | | | | | | | | 20 | | | | | |
| | Polymer emulsion 4 (128)* | | | | | | | | | | | | | 20 | | |
| | Polymer emulsion 5 (85)* | | | | | | | | | | | | | | 20 | 20 |
| | Surfactant | EMULGEN 120 | 2 | 2 | 2 | 2 | 2 | 2 | 2 | 2 | 2 | 2 | 2 | 2 | 2 | 2 |
| | Water-soluble organic solvent | Propylene glycol | 30 | 30 | 30 | 30 | 30 | 30 | 30 | 30 | 30 | 30 | 30 | 30 | 30 | 30 |

| | | | | | | | | | | | | | | | | |
|---|---|---|---|---|---|---|---|---|---|---|---|---|---|---|---|---|
| Note *: Numerical values in the parentheses are acid values (mgKOH/g) of polymers used. | | | | | | | | | | | | | | | | |

**TABLE 3-2**

| | | | Examples | | | | | | | | | Comparative Examples | | | | |
|---|---|---|---|---|---|---|---|---|---|---|---|---|---|---|---|---|
| | | | I-11 | I-12 | I-13 | I-14 | I-15 | I-16 | I-17 | I-18 | I-19 | I-6 | I-7 | I-8 | I-9 | I-10 |
| Composition of water-based ink (part(s)) | Formaldehyde -releasing compound, etc. | dowicil 150 | 0.02 | | | 0.005 | 0.01 | 0.05 | 0.10 | 0.02 | 0.02 | | | 0.02 | 0.02 | |
| | | DMDMH | | 0.02 | | | | | | | | | | | | |
| | | Grotan BK | | | 0.02 | | | | | | | | | | | |
| | | Ploxel LVS | | | | | | | | | | 0.02 | | | | |
| | | Kathon CG | | | | | | | | | | | 0.02 | | | |
| | Ion·exchanged water (q.s. to adjust a whole amount to 100%) | | Bal*¹ | Bal*¹ | Bal*¹ | Bal*¹ | Bal*¹ | Bal*¹ | Bal*¹ | Bal*¹ | Bal*¹ | Bal* ¹ | Bal*¹ | Bal*¹ | Bal*¹ | Bal*¹ |
| Evaluation results | Rub fastness | | 4 | 4 | 4 | 3 | 3 | 4 | 3 | 4 | 3 | 2 | 2 | 2 | 2 | 1 |
| | Antiseptic and antifungal properties | | 4 | 4 | 4 | 2 | 3 | 4 | 4 | 4 | 4 | 4 | 4 | 4 | 4 | 1 |

| | | | | | | | | | | | | | | | | |
|---|---|---|---|---|---|---|---|---|---|---|---|---|---|---|---|---|
| Note *1: Balance | | | | | | | | | | | | | | | | |

As is apparent from the evaluation results shown in Table 3, it was confirmed that when printing characters or images on an ink-jet printing medium using the water-based inks of Examples I-11 to 1-19 containing the respective polymer emulsions of the present invention, it was possible to obtain the printed materials that were excellent in rub fastness.

On the other hand, it was confirmed that the water-based inks of Comparative Examples 1-6 and 1-7 using the antiseptic agents other than the formaldehyde-releasing compound were deteriorated in rub fastness, and the water-based inks of Comparative Examples 1-8 and 1-9 using the polymers having an acid value of less than 150 mgKOH/g were also deteriorated in rub fastness.

Meanwhile, it was confirmed that although the water-based ink of Example 1-4 having a formaldehyde-releasing compound content of 50 ppm was deteriorated in antiseptic and antifungal properties (antiseptic and antifungal effects), the ink-jet printed material obtained using the water-based ink exhibited good rub fastness. The water-based ink containing such a polymer emulsion can be properly used in the applications not necessarily requiring high antiseptic and antifungal properties.

### <Production of Pigment Water Dispersions>

### Production Example II-1

Twenty five parts of the polymer produced by drying the polymer solution (i) obtained in Preparation Example 1 under reduced pressure were mixed in 78.6 parts of MEK. Then, 10.1 parts of a 5N sodium hydroxide aqueous solution (sodium hydroxide solid content: 16.9%; for volumetric titration) available from Wako Pure Chemical Industries, Ltd., were further added into the resulting mixed solution to neutralize the polymer such that the ratio of the number of moles of sodium hydroxide to the number of moles of carboxy groups of the polymer was 40% (neutralization degree: 40%), followed by further adding 400 parts of ion-exchanged water thereto. Furthermore, 100 parts of a carbon black "MONARCH 800" (tradename) as a black pigment available from Cabot Corporation were added to the resulting mixture. The thus obtained dispersion was stirred at 20°C for 60 minutes using a disper "ULTRA DISPER" (tradename) available from Asada Iron Works Co., Ltd., while operating a disper blade thereof at a rotating speed of 7000 rpm.

The thus obtained mixture was subjected to dispersion treatment under a pressure of 200 MPa using "Microfluidizer" (tradename) available from Microfluidics Corporation by passing the mixture through the device 10 times. The thus obtained dispersion liquid was mixed with 250 parts of ion-exchanged water and stirred together, and then allowed to stand at 60°C under reduced pressure to completely remove MEK therefrom, followed by further removing a part of water therefrom. The resulting dispersion was subjected to filtration treatment using a 25 mL-capacity needleless syringe available from Terumo Corporation fitted with a 5 µm-mesh filter (acetyl cellulose membrane; outer diameter: 2.5 cm) available from FUJIFILM Corporation to remove coarse particles therefrom, thereby obtaining a black pigment water dispersion 1 having a solid content of 20%.

### Production Examples II-2 to II-5

The same procedure as in Production Example II-1 was repeated except for using 25 parts of the polymer produced by drying each of the polymer solutions (ii) to (v) obtained in Preparation Example 2 to 5 under reduced pressure in place of the polymer solution (i) obtained in Preparation Example 1, and replacing 10.1 parts of the 5N sodium hydroxide aqueous solution (sodium hydroxide solid content: 16.9%; for volumetric titration) available from Wako Pure Chemical Industries, Ltd., with 8.4 parts thereof (neutralization degree: 40%), 6.7 parts thereof (neutralization degree: 40%), 5.4 parts thereof (neutralization degree: 40%) or 3.6 parts thereof (neutralization degree: 40%), thereby obtaining black pigment water dispersions 2 to 5.

### Production Example II-6

The same procedure as in Production Example II-1 was repeated except that the black pigment was replaced with C.I. Pigment Yellow 74 "Fast Yellow 7414" (tradename) as a yellow pigment available from Sanyo Color Works, Ltd., thereby obtaining a yellow pigment water dispersion 6.

### <Production of Water-Based Inks>

### Example II-1

Two parts of an ether-based nonionic surfactant "EMULGEN 120" (tradename) available from Kao Corporation, 30 parts of propylene glycol and 0.02 part of a formaldehyde-releasing compound "dowicil 150" available from Dow Chemical Company were added to 30 parts of the aforementioned pigment water dispersion 1, and further ion-exchanged water was added to the resulting mixture to adjust a whole amount of the mixture to 100 parts. The thus obtained mixture was mixed for 30 minutes, and then subjected to filtration treatment through a 1.2 µm-mesh filter "MAP-010XS" available from ROKI TECHNO CO., LTD., thereby obtaining a water-based ink II-1.

### Examples II-2 to II-10 and Comparative Examples II-1 to II-6

The same procedure as in Example II-1 was repeated except that the respective components compounded were changed to those shown in Table 4, thereby obtaining water-based inks II-2 to II-16.

Incidentally, the details of the formaldehyde-releasing compounds, etc., shown in Table 4 are as described previously.

### <Evaluation of Water-Based Inks II-1 to II-16>

The ejection stability, antibleeding properties and antiseptic and antifungal properties of the water-based inks II-1 to II-16 obtained above were evaluated by the following methods. The results are shown in Table 4.

### (1) Evaluation of Ejection Stability

The respective water-based inks produced above were loaded to an ink cartridge of a commercially available ink-jet printer (piezoelectric type; equipped with a 30 kHz print head) available from Trytech Co., Ltd., to conduct printing at a temperature of 23°C and a relative humidity of 50%. Thereafter, the print head of the ink-jet printer was allowed to stand in an uncapped state for 30 minutes, and then the printing operation of the ink-jet printer was started again to confirm ejection condition of the ink. The total number of nozzles evaluated for ejection stability of the ink was 2656, and the number of missing nozzles (corresponding to the number of nozzles clogged from which no ink was normally ejected) was counted to evaluate ejection stability of the ink according to the following evaluation ratings. The less the number of the nozzles clogged (missing nozzles), the more excellent the ejection stability of the ink.

### (Evaluation Ratings)

4: No missing nozzles were present;
3: Number of missing nozzles relative to the total number of nozzles evaluated was from 1 to 2/2656, and the ink-ejection condition of the print head in the ink-jet printer could be restored by conducting maintenance operations;
2: Number of missing nozzles relative to the total number of nozzles evaluated was from 3 to 5/2656, and the ink-ejection condition of the print head in the ink-jet printer could be restored by conducting maintenance operations; and
1: Number of missing nozzles relative to the total number of nozzles evaluated was not less than 6/2656, and the ink-ejection condition of the print head in the ink-jet printer could not be restored even after conducting maintenance operations.

If the evaluation rating was Rank 4 or 3, the ejection stability of the ink was acceptable even when used in practical applications.

### (2) Evaluation of Antibleeding Properties

Any one of the black inks obtained in Examples II-1 to II-9 and Comparative Examples II-1 to II-6 was loaded together with the yellow ink obtained in Example II-10 to the ink cartridge of the ink-jet printer used in the above item (1) to conduct Duty 20% printing on a coated paper "OK Topcoat Plus" (tradename; water absorption: 4.9 g/m²) available from Oji Paper Co., Ltd. Upon the printing, the condition of overlapping between droplets of the respective black inks and droplets of the yellow ink was observed at a high magnification using a handy-type image evaluation system "Model PIAS-II" available from Trek Japan K.K. to evaluate antibleeding properties of the respective inks according to the following evaluation ratings.

### (Evaluation Ratings)

4: Two kinds of ink droplets were each independently present.
3: Two kinds of ink droplets were unified and formed into a cocoon shape.
2: Two kinds of ink droplets were unified and formed into an ellipse.
1: Two kinds of ink droplets were unified and formed into a circle.

If the evaluation rating was Rank 4 or 3, the antibleeding properties of the inks were acceptable when used in practical applications.

### (3) Evaluation of Antiseptic and Antifungal Properties

Twenty milliliters (20 mL) of the water-based ink as a test sample to be measured were inoculated with a fungus liquid (Pseudomonas aeruginosa, Staphylococcus aureus and Escherichia coli) such that an amount of the fungi inoculated was 1 x 106 CFU/mL, and the resulting solution was allowed to stand at room temperature, so that the test sample and the fungi were brought into contact with each other for a predetermined time.

The number of the fungi present in the solution was measured over time, and the antiseptic and antifungal properties of the test sample were evaluated by the change in number of the fungi present in the solution.

The number of the fungi present in the solution was measured as follows. That is, 0.1 mL of the solution separated from the test sample was applied onto an SCD (soybean-casein digest) agar medium "DAIGO" available from Wako Pure Chemical Industries, Ltd., and cultivated at 32.5°C for 2 days to obtain colonies of the fungi, and the number of the fungi still remaining alive was determined from the number of the colonies thus obtained. The difference between a logarithmic value of an incipient number of the fungi and a logarithmic value of the number of the remaining viable fungi was calculated as the number of Log of fungal decay. The antiseptic and antifungal properties of the test sample was evaluated according to the following evaluation ratings.

### (Evaluation Ratings)

4: After the elapse of 1 day from the inoculation, not less than 4Log was reduced.
3: After the elapse of 3 days from the inoculation, not less than 4Log was reduced.
2: After the elapse of 7 days from the inoculation, not less than 4Log was reduced.
1: After the elapse of 7 days from the inoculation, less than 4Log was reduced, or no reduction in Log number occurred.

If the evaluation rating was Rank 4 or 3, the antiseptic and antifungal properties of the test sample were acceptable when used in practical applications.

**TABLE 4-1**

| | | | Examples | | | | | | | | | | Comparative Examples | | | | | |
|---|---|---|---|---|---|---|---|---|---|---|---|---|---|---|---|---|---|---|
| | | | II-1 | II-2 | II-3 | II-4 | II-5 | II-6 | II-7 | II-8 | II-9 | II-10 | II-1 | II 2 | II-3 | II-4 | II-5 | II-6 |
| No. of water-based ink | | | II-1 | II 2 | II-3 | II-4 | II-5 | II-6 | II-7 | II-8 | II-9 | II-10 | II-11 | II-12 | II-13 | II-14 | II-15 | II-16 |
| Composition of water-based ink (part(s)) | Black pigment water dispersion 1 (240)* | | 30 | 30 | 30 | 30 | 30 | 30 | 30 | | | | 30 | 30 | | | 30 | |
| | Black pigment water dispersion 2 (200)* | | | | | | | | | 30 | | | | | | | | |
| | Black pigment water dispersion 3 (160)* | | | | | | | | | | 30 | | | | | | | |
| | Black pigment water dispersion 4 (128)* | | | | | | | | | | | | | | 30 | | | |
| | Black pigment water dispersion 5 (85)* | | | | | | | | | | | | | | | 30 | | 30 |
| | Yellow pigment water dispersion 6 (240)* | | | | | | | | | | | 30 | | | | | | |
| | Surfactant | EMULGEN 120 | 2 | 2 | 2 | 2 | 2 | 2 | 2 | 2 | 2 | 2 | 2 | 2 | 2 | 2 | 2 | 2 |
| | Water -soluble organic solvent | Propylene glycol | 30 | 30 | 30 | 30 | 30 | 30 | 30 | 30 | 30 | 20 | 30 | 30 | 30 | 30 | 15 | 30 |

| | | | | | | | | | | | | | | | | | | |
|---|---|---|---|---|---|---|---|---|---|---|---|---|---|---|---|---|---|---|
| Note *: Numerical values in the parentheses are acid values (mgKOH/g) of polymers used. | | | | | | | | | | | | | | | | | | |

**TABLE 4-2**

| | | | Examples | | | | | | | | | | Comparative Examples | | | | | |
|---|---|---|---|---|---|---|---|---|---|---|---|---|---|---|---|---|---|---|
| | | | II-1 | II-2 | II-3 | II-4 | II-5 | II-6 | II-7 | II-8 | II-9 | II-10 | II-1 | II-2 | II-3 | II-4 | II-5 | II-6 |
| Composition of water-based ink (part(s)) | Formaldehyde -releasing compound, etc. | dowicil 150 | 0.02 | | | 0.005 | 0.015 | 0.05 | 0.10 | 0.02 | 0.02 | 0.02 | | | 0.02 | 0.02 | 0.02 | |
| | | DMDMH | | 0.02 | | | | | | | | | | | | | | |
| | | Grotan BK | | | 0.02 | | | | | | | | | | | | | |
| | | Ploxel LVS | | | | | | | | | | | 0.02 | | | | | |
| | | Kathon CG | | | | | | | | | | | | 0.02 | | | | |
| | Ion-exchanged water (q.s. to adjust a whole amount to 100%) | | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ | Bal*¹ |
| Evaluation results | Ejection stability | | 4 | 4 | 4 | 4 | 4 | 3 | 3 | 4 | 3 | 3 | 4 | 4 | 2 | 1 | 2 | 2 |
| | Antibleeding properties | | 3 | 3 | 3 | 3 | 3 | 4 | 4 | 3 | 3 | 4 | 2 | 2 | 2 | 2 | 4 | 1 |
| | Antiseptic and antifungal properties | | 4 | 4 | 4 | 2 | 3 | 4 | 4 | 4 | 4 | 4 | 4 | 4 | 4 | 4 | 4 | 1 |

| | | | | | | | | | | | | | | | | | | |
|---|---|---|---|---|---|---|---|---|---|---|---|---|---|---|---|---|---|---|
| Note *1: Balance | | | | | | | | | | | | | | | | | | |

As is apparent from the evaluation results shown in Table 4, it was confirmed that the water-based inks of Examples II-11 to II-10 according to the present invention were excellent in ejection stability and antibleeding properties upon ink-jet printing.

On the other hand, it was confirmed that the water-based inks of Comparative Examples II-1 and II-2 using the antiseptic agents other than the formaldehyde-releasing compound were deteriorated in antibleeding properties, and the water-based inks of Comparative Examples II-3 and II-4 using the polymer having an acid value of less than 150 mgKOH/g were deteriorated in ejection stability and antibleeding properties, and further the water-based ink of Comparative Examples II-5 having a water-soluble organic solvent content of less than 18% by mass was deteriorated in ejection stability.

Meanwhile, it was confirmed that the water-based ink of Example II-4 having a formaldehyde-releasing compound content of 50 ppm was deteriorated in antiseptic and antifungal properties (antiseptic and antifungal effects), but was capable of exhibiting excellent effects, i.e., excellent ejection stability and antibleeding properties upon ink-jet printing. The water-based ink of Example II-4 can be properly used in the applications not necessarily requiring so high antiseptic and antifungal properties.

### Industrial Applicability

The polymer emulsion of the present invention is capable of exhibiting excellent rub fastness even when formed into a coating film or even when printed on a low-liquid absorbing printing medium. In addition, the water-based ink for ink-jet printing according to the present invention is useful because the ink is capable of exhibiting excellent ejection stability and antibleeding properties upon the ink-jet printing.

## Claims

1. A polymer emulsion comprising a polymer and water, in which the polymer is a random copolymer or a block copolymer which comprises a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; and the polymer emulsion further comprises a formaldehyde-releasing compound.

2. The polymer emulsion according to claim 1, wherein a glass transition temperature of the carboxy group-containing polymer is not lower than 50°C.

3. The polymer emulsion according to claim 1 or 2, wherein the formaldehyde-releasing compound is at least one compound selected from the group consisting of a triazine compound and a hydantoin compound.

4. The polymer emulsion according to any one of claims 1 to 3, wherein a mass ratio of the constitutional unit derived from the at least one monomer (a) selected from the group consisting of acrylic acid and methacrylic acid to the constitutional unit derived from the hydrophobic vinyl monomer (b) [constitutional unit derived from at least one monomer (a) selected from the group consisting of acrylic acid and methacrylic acid/constitutional unit derived from hydrophobic vinyl monomer (b)] in the carboxy group-containing polymer is not less than 0.5 and not more than 2.0.

5. A use of the polymer emulsion according to any one of claims 1 to 4 in a water-based ink.

6. A water-based ink for ink-jet printing comprising a pigment, a polymer, a water-soluble organic solvent and water, in which the polymer is a random copolymer or a block copolymer which comprises a constitutional unit derived from (a) at least one monomer selected from the group consisting of acrylic acid and methacrylic acid and a constitutional unit derived from (b) a hydrophobic vinyl monomer, and is in the form of a carboxy group-containing polymer having an acid value of not less than 150 mgKOH/g and not more than 300 mgKOH/g; the water-soluble organic solvent comprises at least one compound selected from the group consisting of a polyhydric alcohol and a polyhydric alcohol alkyl ether, and a total content of the polyhydric alcohol and the polyhydric alcohol alkyl ether in the water-based ink is not less than 18% by mass; and the water-based ink further comprises a formaldehyde-releasing compound.

7. The water-based ink for ink-jet printing according to claim 6, wherein a total content of the polyhydric alcohol and the polyhydric alcohol alkyl ether which have a boiling point of not higher than 250°C in the water-based ink is not less than 18% by mass.

8. The water-based ink for ink-jet printing according to claim 6 or 7, wherein the pigment and the polymer are present in the form of pigment-containing polymer particles.

9. The water-based ink for ink-jet printing according to any one of claims 6 to 8, wherein a content of the formaldehyde-releasing compound in the water-based ink is not less than 130 ppm and not more than 1000 ppm.

10. The water-based ink for ink-jet printing according to any one of claims 6 to 9, wherein the formaldehyde-releasing compound is at least one compound selected from the group consisting of a triazine compound and a hydantoin compound.

11. The water-based ink for ink-jet printing according to any one of claims 6 to 10, wherein the formaldehyde-releasing compound is at least one compound selected from the group consisting of 1,3,5-triazine-1,3,5-(2H, 4H, 6H)-tris(ethanol), 1,3-bis(hydroxymethyl)-5,5-dimethyl hydantoin and cis-1-(3-chloroallyl)-3,5,7-triaza-1-azonia adamantane chloride.

12. The water-based ink for ink-jet printing according to any one of claims 6 to 11, wherein a mass ratio of the constitutional unit derived from the at least one monomer (a) selected from the group consisting of acrylic acid and methacrylic acid to the constitutional unit derived from the hydrophobic vinyl monomer (b) [constitutional unit derived from at least one monomer (a) selected from the group consisting of acrylic acid and methacrylic acid/constitutional unit derived from hydrophobic vinyl monomer (b)] in the carboxy group-containing polymer is not less than 0.5 and not more than 2.0.

13. The water-based ink for ink-jet printing according to any one of claims 6 to 12, wherein a boiling point of the polyhydric alcohol and the polyhydric alcohol alkyl ether (in terms of a weighted mean value of boiling points of the polyhydric alcohol and the polyhydric alcohol alkyl ether) is not lower than 150°C and not higher than 250°C.

14. The water-based ink for ink-jet printing according to any one of claims 6 to 13, wherein a content of an organic solvent having a boiling point of higher than 250°C in the water-soluble organic solvent is less than 10% by mass.

15. The water-based ink for ink-jet printing according to any one of claims 6 to 14, wherein a content of the water-soluble organic solvent in the water-based ink is not less than 15% by mass and not more than 60% by mass on the basis of a total content of water and the water-soluble organic solvent.

16. A use of the water-based ink for ink-jet printing according to any one of claims 6 to 15 for ink-jet printing.
